# EUROPÄISCHE PATENTSCHRIFT

(11) **EP 3 553 034 B1**
(45) Veröffentlichungstag und Bekanntmachung des Hinweises auf die Patenterteilung: **09.08.2023**
(21) Anmeldenummer: 19167871.3
(22) Anmeldetag: 08.04.2019
(51) Int. Cl.: C03B 5/225, C03B 5/03

(54) **VERFAHREN ZUR HERSTELLUNG VON GLASPRODUKTEN SOWIE HIERZU GEEIGNETE VORRICHTUNG**
METHOD FOR PRODUCING GLASS PRODUCTS AND DEVICE SUITABLE THEREFOR
PROCÉDÉ DE FABRICATION DE PRODUITS EN VERRE AINSI QUE DISPOSITIF CORRESPONDANT

(30) Priorität: 10.04.2018 DE 102018108418
(43) Veröffentlichungstag der Anmeldung: 16.10.2019
(73) Patentinhaber: SCHOTT AG, 55122 Mainz (DE)
(72) Erfinder: SCHMITT, Stefan, 55271 Stadecken-Elsheim (DE); SCHMIDBAUER, Wolfgang, Dr., 55126 Mainz (DE); MÜLLER, Christian, Dr., 55122 Mainz (DE); LENTES, Frank-Thomas, Dr., 55411 Bingen (DE); HAHN, Michael, 65329 Hohenstein (DE); MÄNNL, Reinhard, 95666 Mitterteich (DE); RÖMER, Hildegard, Dr., 65439 Flörsheim (DE); NAUMANN, Karin, Dr., 55270 Ober-Olm (DE)
(74) Vertreter: Blumbach · Zinngrebe Patentanwälte PartG mbB

(56) Entgegenhaltungen:
- WO-A1-2007/085397
- DE-A1-102009 002 336
- US-A1- 2006 291 528

## Beschreibung

Die vorliegende Erfindung betrifft allgemein ein Verfahren zur Herstellung von Glasprodukten sowie eine hierzu geeignete Vorrichtung.

### Verfahren zum Herstellen einer Glasschmelze sind

seit langem bekannt. Hierzu wird ein geeignetes Behältnis, etwa eine Wanne oder ein Tiegel, ausgewählt und mit Gemenge oder auch Scherben gefüllt. Das zugeführte Material wird erhitzt, so das eine flüssige Glasschmelze entsteht. Die Materialzuführung und/oder der Abzug flüssiger Schmelze für die Formgebung kann hierbei kontinuierlich oder in bestimmten Zeitabständen erfolgen.

In das Gemenge und in die Glasschmelze wird Wärme eingebracht, beispielsweise durch Beheizung aus dem Oberofenraum oder durch direkte elektrische Beheizung mittels Elektroden.

Das Aufschmelzen des Gemenges und die hierzu erforderliche Zeit ist vor allem durch die Kinetik des Wärmetransportes bestimmt. Dies kann zu vielfältigen, infolge des Aufschmelzens entstehenden Strömungen in der entstehenden Glasschmelze führen.

Anteile dieser Strömungen können bereits stark erhitzte Volumenelemente der Glasschmelze unter das Gemenge zurückfördern und damit dessen kontinuierliches Abschmelzen von unten her erleichtern. Erst nach dem vollständigen Aufschluss des Gemenges kann, sofern erforderlich, eine Läuterung erfolgen, um etwaige Blasen aus der Schmelze zu entfernen. Gerade bei Spezialgläsern ist der Gehalt an Blasen im Allgemeinen ein wichtiges Qualitätsmerkmal, und eine möglichst geringe Zahl wird für das Endprodukt angestrebt.

Obwohl eine hohe Wannenausbeute, d.h. ein möglichst effizientes Verfahren zum Schmelzen von Glas, gewünscht ist, kann dies nicht in beliebiger Weise durch einen höheren Energieeintrag beim Einschmelzen von Gemenge oder von Glasscherben erreicht werden. Ein zu hoher Energieeintrag kann beispielsweise dazu führen, dass es zu einem vorzeitigen Aktivieren von Läutermittel kommt, so dass diese während der eigentlichen Läuterphase nicht mehr zur Verfügung stehen. Erschwert wird das richtige Einstellen des Energieeintrags durch das komplexe Strömungsverhalten in der entstehenden Glasschmelze.

Untersuchungen, beispielsweise beschrieben in der Druckschrift Trier, W.: Glasschmelzöfen - Konstruktion und Betriebsverhalten, Springer-Verlag 1984, haben gezeigt, dass es zu Überlagerungen von Durchsatzströmung und Konvektionsströmung kommen kann, verbunden mit von der Geometrie her bedingten Besonderheiten der Strömung des Glases in der Glasschmelzwanne. Dies kann zu einem komplexen Mischungsverhalten führen, welches ferner Änderungen unterworfen ist, etwa bei einer Änderung des Gemengesatzes oder des Scherbenanteils.

Die Druckschrift DE 101 16 293 schlägt ein Verfahren vor, bei dem Konvektion dadurch erzeugt wird, dass Mediumstrahlen in die Schmelze eingeleitet und dass dabei die Strahlen derart angeordnet werden, dass sich in der Glasschmelze eine helixartige Strömung mit einer Achse in Prozessrichtung ausbildet, die langsam zum Auslauf hinwandert. Diese Spiralströmung wird primär erzeugt durch den mechanischen Impuls von Blasdüsen. Ein derartiges Verfahren erfordert allerdings ein relativ großes Schmelzaggregat, zumindest ist eine gewisse Länge erforderlich, um die Mediumstrahlen in Prozessrichtung einbringen zu können. Der erreichbare Wannendurchsatz ist auch nicht sehr hoch.

Die Druckschrift DE 10 2005 039 919 A1 beschreibt eine Schmelzwanne mit einem Design, welches hinsichtlich der notwendigen minimalen Verweilzeit der Blasen ausgewählt ist, um ein Läuterverfahren zu optimieren. Der Hintergrund liegt in der Reduzierung von Läutermittelgehalten bei der Herstellung von Glaskeramiken.

Wünschenswert wäre es allerdings, entweder bei bestehenden Einschmelzvorrichtungen den Durchsatz zu erhöhen, oder aber, insbesondere für die Auslegung neuer Einschmelzvorrichtungen, diese bei gleichem Durchsatz kleiner zu gestalten und damit letztendlich die Verweilzeit des Gemenges in der Schmelzvorrichtung zu reduzieren. Auf diese Weise kann der Wannendurchsatz gesteigert werden, d.h. die Menge des abgezogenen Glases in Bezug zu dem Volumen der Schmelzwanne.

Die Qualität der erzeugten Glasprodukte soll dabei aber zumindest nicht verschlechtert werden, d.h. die Ausbeute soll zumindest gleichbleiben.

US2006291528 A1 lehrt ein Verfahren und eine entsprechende Anlage zur Herstellung von Glasprodukten umfassend die Schritte: Beschickung eines Ofens mit Glasrohstoffen, Erwärmung der Glasrohstoffe, wobei die Rohstoffe die Schmelze teilweise bedecken, und Ausleitung der Schmelze aus dem Ofen. Der Ofen wird induktiv so beheizt, dass die Temperatur im Innern der Schmelze 150°C über der an den Randbereichen liegt. Ein Verfahren wie in US2006291528 A1 wird ebenfalls in WO2007085397 A1 offenbart. DE102009002336 A1 lehrt die Nutzung weiterer Läuterwannen nach der Einschmelzwanne, wobei die Temperatur im Inneren der Glasschmelze in der Läuterwanne vorzugsweise 200-400°C über der Temperatur an der Glasoberfläche liegt.

Demnach ist es ein Ziel der vorliegenden Erfindung, ein effizienteres Verfahren zum Einschmelzen von Glas bereit zu stellen. Gegenüber den aus dem Stand der Technik bekannten Verfahren soll dabei ein vorgegebener Massestrom an Glasrohstoffen, auch als Wannendurchsatz bezeichnet, in einem deutlich kleineren Schmelzaggregat in Schmelze überführt werden können, bei zumindest gleicher oder sogar besserer Qualität. Bei einer derartigen Einschmelzvorrichtung müsste demnach die Zeit für das Aufschmelzen des Gemenges und/oder der Scherben reduziert werden, so dass in Bezug auf ein gegebenes Einschmelzvolumen der Durchsatz erhöht werden kann.

Ferner wäre es wünschenswert, wenn die Zeit für das Aufschmelzen konkreter vorgegeben und sogar eingestellt werden kann.

Dieser Aufgabe haben sich die Erfinder angenommen.

Überraschend einfach wird diese Aufgabe durch ein Verfahren zur Herstellung von Glasprodukten, vorzugsweise zur kontinuierlichen Herstellung von Glasprodukten aus einer Glasschmelze sowie eine zur Durchführung des Verfahrens geeignete Einschmelzvorrichtung nach einem der unabhängigen Ansprüche gelöst. Bevorzugte Ausführungsformen und Weiterbildungen der Erfindung sind den jeweiligen Unteransprüchen zu entnehmen.

Gegenstand der Erfindung ist demnach ein Verfahren gemäß Anspruch 1 zur vorzugsweise kontinuierlichen Herstellung von Glasprodukten aus einer Glasschmelze, umfassend die folgenden Schritte:
- Bereitstellen von Glasrohstoffen, insbesondere Gemenge und/oder Glasscherben,
- Erwärmen der Glasrohstoffe in einer Einschmelzvorrichtung, wobei die Einschmelzvorrichtung eine Einschmelzwanne zum Erzeugen einer Glasschmelze aus den Glasrohstoffen und einen Oberofen umfasst, wobei zumindest ein Teil der Oberfläche des Einschmelzbereiches der Einschmelzvorrichtung mit den Glasrohstoffen bedeckt ist und zumindest ein kleiner Teil der Oberfläche des Einschmelzbereiches nicht bedeckt ist,
- Beheizen der Einschmelzvorrichtung derart, dass die Temperatur T_{G_BOD} der Glasschmelze am Boden unter der freien Oberfläche der Einschmelzvorrichtung und die Temperatur T_{O} der Atmosphäre im Oberofen jeweils mindestens 1.300 °C beträgt, wobei ein vertikaler Temperaturunterschied T_{G_BOD} - T_{O} von mindestens 50°C eingestellt wird, wobei die Temperatur der Glasschmelze am Boden größer ist als die Temperatur der Atmosphäre im Oberofen, so dass gilt: T_{G_BOD} > T_{O}, und
- Ausleiten der Glasschmelze aus der Einschmelzwanne, wobei die ausgeleitete Glasschmelze vorzugsweise weniger als 1000 Blasen/kg mit einem Durchmesser von größer 50 µm aufweist.

Im Zusammenhang mit diesem Dokument wird unter dem Begriff Einschmelzvorrichtung eine Anlage oder ein Aggregat zum Schmelzen von Glas verstanden. Diese Einschmelzvorrichtung kann eine oder mehrere Einschmelzwannen, Tiegel oder sonstige Behältnisse zum Schmelzen von Glas umfassen. Nachfolgend wird allein der Übersichtlichkeit halber zusammenfassend von einer Einschmelzwanne gesprochen.

Die Einschmelzwanne kann verschiedene Bereiche umfassen, beispielsweise einen Einlegebereich zum Einlegen von Glasrohstoffen in die Einschmelzwanne, einen Bereich zum Aufschmelzen und/oder einen Bereich zum Homogenisieren bzw. Läutern der Glasschmelze. Diese Bereiche können baulich getrennt oder aber auch baulich zusammengefasst vorliegen. So kann beispielsweise das Einlegen und Aufschmelzen der Glasrohstoffe in einem ersten Bereich stattfinden, und das Homogenisieren bzw. Läutern in einer separaten Läutereinrichtung. Dieser Läuterbereich kann durch einen Wall am Wannenboden baulich von dem Einlege- bzw. Aufschmelzbereich abgetrennt sein. Alternativ oder zusätzlich kann auch ein von oben in die Glasschmelze hineinragender sogenannter Brückenwall vorgesehen sein. Sofern baulich getrennt, etwa in eine Aufschmelzwanne und eine Läuterwanne, sind die verschiedenen Bereiche miteinander über geeignete Zuleitungen verbunden, welche auch als Durchlass oder Durchfluss bezeichnet werden.

Für bestimmte Anwendungen kann sich noch eine sogenannte Arbeitswanne oder ein Verteiler anschließen. Aufgeschmolzenes Glas kann kontinuierlich oder diskontinuierlich abgezogen und, nach einem Abkühlen auf eine vorbestimmte Arbeitstemperatur, geformt oder weiterverarbeitet werden.

Unter dem Begriff Glasrohstoff ist in diesem Zusammenhang das in die Einschmelzwanne aufgegebene bzw. eingelegte Gut gemeint, umfassend Gemenge und/oder Glasscherben. Das Einlegen kann mittels einer geeigneten Zuführeinrichtung, welche von Vorteil eine Einlegemaschine umfassen kann, in den hierzu vorgesehenen Einlegebereich für das Einlegen der Glasrohstoffe erfolgen. Die mit Glasrohstoffen bedeckte Oberfläche der Glasschmelze wird nachfolgend auch als Gemengeteppich bezeichnet.

In der Regel ist eine geschlossene obere Abdeckung der Einschmelzvorrichtung, insbesondere der Einschmelzwanne, vorgesehen, welche auch als Oberofen bezeichnet wird. Dieser Oberofen umfasst im allgemeinen Seitenwände und ein Gewölbe. Im Fall fossiler Beheizung der Einschmelzwanne können die Heizeinrichtungen, beispielsweise Gasbrenner, in der Seitenwand angeordnet sein. Der Oberofen wird dabei im Allgemeinen so gestaltet, dass ein guter Wärmeübergang zwischen dem durch Seitenwände und Gewölbe definierten Raum und der Oberfläche der Glasschmelze ermöglicht wird. Die vorliegende Erfindung ist besonders gut geeignet für Einschmelzvorrichtungen, welche über eine fossile Beheizung im Oberofen verfügen.

Die Einschmelzwanne definiert ein Volumen, welches zum Einschmelzen der aufgegebenen Glasrohstoffe ausgebildet ist.

Dieses Volumen kann im Allgemeinen bestimmt werden durch die sogenannte Schmelzfläche, welche die Grenzfläche zu dem Raum und damit die Oberfläche der Glasschmelze bezeichnet, und die Höhe, auch als Badtiefe bezeichnet. In diesem Volumen befindet sich im Betrieb der Einschmelzvorrichtung die Glasschmelze, welche aufgeschmolzenes Glas, aber auch noch Bestandteile der aufgegebenen Glasrohstoffe, also Gemenge und/oder Glasscherben, umfassen kann.

Die Auslegung der Einschmelzvorrichtung, insbesondere die Geometrie der Einschmelzwanne, aber auch die Auswahl und die Anordnung der Heizeinrichtungen zur Erwärmung der Glasrohstoffe sind entscheidend für die Effizienz, also den Wannendurchsatz, und die Lebensdauer der Anlage. Der Wannendurchsatz wird dabei im Wesentlichen durch die Verweilzeit der Glasrohstoffe in der Einschmelzvorrichtung bestimmt. Die Verweilzeit beschreibt also die Aufenthaltsdauer der Glasrohstoffe, also beispielsweise der Gemengepartikel, in dem durchströmten System, also in der Einschmelzvorrichtung, gemessen vom Zeitpunkt des Einlegens bis zum Verlassen über den Auslauf.

Die Verweilzeit kann für eine Einschmelzvorrichtung mittels sogenanntem Impulsmarkierungsverfahren ermittelt werden, wobei eine sogenannte Tracersubstanz zusammen mit den Glasrohstoffen aufgegeben und die Zeit zwischen der Aufgabe und der ersten Konzentrationserhöhung an einer Entnahmestelle, also beispielsweise am Auslauf, gemessen wird. Eine derartige Verweilzeitanalyse für Glasschmelzanlagen ist beispielsweise in der Druckschrift Schippan, D.: Untersuchung des reaktionstechnischen Verhaltens in Behälterglaswannen mit Tracerversuchen, von der Fakultät für Bergbau, Hüttenwesen und Geowissenschaften der Rheinisch-Westfälischen Technischen Hochschule Aachen genehmigte Dissertation, 2003 beschrieben.

Alternativ kann die minimale Verweilzeit auch mit Hilfe mathematischer Simulationsmodelle berechnet werden.

Schmelzverfahren nach dem Stand der Technik verfügen über eine starke Rückströmung von heißer Glasschmelze aus dem Volumen der Einschmelzwanne in den Bereich der Rohstoffeinlage. Dadurch wird zum einen Energie zum Aufschmelzen der Rohstoffe in den Bereich der Rohstoffeinlage transportiert und zum anderen durch die hohen Strömungsgeschwindigkeiten induzierte hohe Scherraten zum bessern Einschmelzen der Rohstoffe erzeugt. Dies wird allgemein als günstig betrachtet, da in der Regel ein schnelles Aufschmelzen der eingetragenen Glasrohstoffe und/oder Glasscherben gewünscht ist, um einen vergleichsweise hohen Wannendurchsatz, also einen großen Massestrom an Glasrohstoffen, zu erreichen. Vor diesem Hintergrund wird eine sehr hohe Temperatur im Oberofen angestrebt, welche bei 1.300 °C oder darüber liegen kann.

Bei einer reinen Beheizung von oben, beispielsweise mittels fossiler Heizeinrichtungen, kann zwar im Oberofen eine sehr hohe Temperatur eingestellt werden. Diese nimmt aber von der Oberfläche der Glasschmelze aus gesehen in Richtung Boden der Einschmelzwanne stark ab, was zu den oben genannten Strömungen führen kann.

Besser wäre es dagegen, den Energieeintrag so zu gestalten, dass eine homogenere, kontinuierliche Erwärmung des Volumens mit Glasrohstoffen und/oder Glasschmelze gewährleistet wird, da die sich ausbildenden starken Rückströmungen letztendlich den Durchsatz und damit die Effizienz der Einschmelzvorrichtung herabsetzen. So können etwa deutliche Rückströmungen zu noch größeren Vorströmungen führen und beinhalten dabei die Gefahr der Erzeugung schneller und damit kritischer Pfade. Hierunter sind Pfade zu verstehen, welche besonders schnell das Schmelzvolumen durchlaufen und in den kritischsten Fällen dabei auch Zonen mit geringen mittleren Temperaturen passieren. Diese Pfade gelten daher als besonders kritisch hinsichtlich einer möglichen Qualitätsverminderung im Produkt. Nachteil dabei ist weiterhin, dass auch Blasen aus dem Bereich der Grenzschicht zwischen Glasschmelze und Glasrohstoffen mit in die Glasschmelze gelangen und großräumig im Volumen verteilt werden können.

Der Temperatureintrag mittels allein im Oberofen angeordneter Heizeinrichtungen in die Glasschmelze ist zudem ungleich und hängt von dem Bedeckungsgrad der Glasschmelze mit aufgegebenen Glasrohstoffen ab. Zumindest ist der Wärmeeintrag deutlich ungünstiger in denjenigen Bereichen, welche mit Glasrohstoffen bedeckt sind.

Vor diesem Hintergrund wurde bislang versucht, diesen Bedeckungsgrad der Oberfläche mit eingelegten Glasrohstoffen möglichst klein zu halten und diesen kleinen Bereich mit einem hohen Energieeintrag möglichst rasch aufzuschmelzen.

Völlig unerwartet haben die Erfinder herausgefunden, dass es unter bestimmten Umständen günstig sein kann, einen wesentlich höheren Bedeckungsgrad der Oberfläche mit Glasrohstoffen anzustreben, und vorzugsweise hierbei gleichzeitig eine ganz bestimmte Temperaturverteilung in der Glasschmelze einzustellen.

Die Ursache hierfür wird darin gesehen, dass ein höherer Bedeckungsgrad der Oberfläche mit Glasrohstoffen in Kombination mit geringeren Temperaturen über der mit Glasrohstoffen bedeckten Fläche einer Versinterung an der Oberfläche, insbesondere an den nicht bedeckten Bereichen der Oberfläche, entgegenwirkt. Die Erfinder haben erkannt, dass eine Versinterung der Oberfläche den Gasaustritt aus der sich darunter befindlichen Glasschmelze ungünstig beeinflusst, in dem sie einen Gasaustritt aus der Glasschmelze oder aus der Grenzschicht reduziert oder sogar gänzlich unterbindet. Dies führt dazu, dass Gas in der Glasschmelze verbleibt und später in das erzeugte Glasprodukt gelangen kann. Ein Eintrag von Gasen lässt sich kaum vermeiden, da die Gase in gebundener Form oder zusätzlich durch die Glasrohstoffe in die Glasschmelze eingetragen werden.

Um dem entgegenzuwirken, wird im Sinne der Erfindung versucht, einen möglichst großen Anteil der Oberfläche der Glasschmelze möglichst offenporig zu halten. Dies kann besonders günstig dadurch erfolgen, dass ein möglichst hoher Anteil der Oberfläche mit Glasrohstoffen bedeckt wird. Dieser Gemengeteppich kann einer Versinterung der Oberfläche entgegenwirken. Im Zusammenspiel mit einer im Vergleich zur Temperatur der Glasschmelze eher niedrigen Oberofentemperatur verbleibt die Gemengedecke länger offen.

Auf diese Weise kann überraschenderweise der Gasaustritt aus der Glasschmelze signifikant verbessert werden. Eine Versinterung dagegen führt zu einer Anreicherung der oberflächennahen Schicht mit Ablagerungen ähnlich einer Schlackenbildung, welche den Gausaustritt aus der Glasschmelze stark vermindern kann.

Es hat sich gezeigt, dass der Gasaustritt signifikant verbessert werden kann, wenn die Bedeckung der Glasoberfläche des Einschmelzbereiches mit Gemenge wenigstens 30 % beträgt. Ein größerer Bedeckungsgrad erhöht den positiven Effekt, so das bevorzugt mehr als 40 % und besonders bevorzugt mehr als 50 % der zur Verfügung stehenden Oberfläche bedeckt sind. Es ist nicht gewünscht, dass die gesamte Oberfläche mit Glasrohstoffen bedeckt ist. Der Bedeckungsgrad sollte daher auch nicht mehr als 80 %, bevorzugt nicht mehr als 70 % und besonders bevorzugt nicht mehr als 60 % der verfügbaren Oberfläche betragen.

Um die Prozessführung zu verbessern und einen homogeneren Energieeintrag zu gewährleisten, ist erfindungsgemäß vorgesehen, in der Glasschmelze und/oder in dem Oberofen ganz bestimmte Temperaturen und, daraus resultierend, ganz bestimmte vertikale und/oder horizontale Temperaturdifferenzen einzustellen. Hierzu ist es erforderlich, die Temperatur an verschiedenen Orten in dem Volumen der Einschmelzwanne und auch oberhalb im Oberofen zu kennen. Diese Temperaturen können in vorteilhafter Weise für die Auslegung und im späteren Betrieb für eine Regelung der Einschmelzvorrichtung genutzt werden.

Zum Messen der Temperaturen im Betrieb können geeignete Thermoelemente, etwa Tauch-Thermoelemente oder Pyrometer verwendet werden, für die Auslegung alternativ oder zusätzlich auch mathematische Modelle verwendet werden. Die Auslegung von Einschmelzvorrichtungen mittels mathematischer Modelle ist exemplarisch in der Druckschrift DE 10 2005 039 919 A1 vom selben Anmelder beschrieben und wird hiermit vollumfänglich inkorporiert.

Im Gegensatz zu bekannten Verfahren wird zur erfindungsgemäßen Verfahrensführung vorzugsweise nicht nur die Temperatur im Oberofen berücksichtigt, sondern auch die Temperatur in der Glasschmelze, also im Volumen der Einschmelzwanne, vorzugsweise in unterschiedlicher Höhe, insbesondere im bodennahen Bereich der Glasschmelze und/oder in einem Bereich in der Glasschmelze angrenzend an den Gemengeteppich und/oder in einem oberflächennahen Bereich der Glasschmelze, welcher nicht bedeckt ist. Hierdurch ist es möglich, das Strömungsverhalten in der Einschmelzwanne weiter zu optimieren, wobei insbesondere eine Rückströmung von bereits geschmolzenem Glas reduziert werden kann.

Dem liegt die Erkenntnis zugrunde, dass Strömungen in der Glasschmelze zu einem wesentlichen Teil auf Dichteunterschieden des Glases an verschiedenen Orten der Einschmelzwanne basieren. Neben der Beeinflussung der Dichte als Funktion der Temperatur haben auch Blasen im Glas bzw. in der Glasschmelze einen erheblichen Einfluss auf die Dichte.

Weniger Blasen im Volumen führen daher zu höheren Dichten und dadurch zu geringeren Dichteunterschieden zu anderen Regionen in der Einschmelzwanne.

In der Konsequenz bedeutet dies, dass die mittlere Verweilzeit der Glasrohstoffe in der Einschmelzwanne reduziert werden kann. Somit können die Effizienz der Einschmelzvorrichtung und damit der Wannendurchsatz gesteigert werden.

Um das Strömungsverhalten in der Einschmelzwanne wie gewünscht zu steuern, wird in einer bevorzugten Ausführungsform die Temperatur der Glasschmelze am Boden unter der freien Oberfläche der Einschmelzvorrichtung T_{G_BOD} bestimmt. Ferner wird die Temperatur T_{O} der Atmosphäre im Oberofen herangezogen.

Die Temperatur T_{O} ist in anderen Worten die Oberofen-Temperatur, auch Gewölbetemperatur genannt, im Bereich oberhalb der mit Gemenge bedeckten Glasoberfläche. Gemessen werden kann diese Temperatur mit durch das Gewölbe oder auch die Seitenwand der Einschmelzanlage führenden Thermoelementen, deren Spitzen bis in den Ofenraum hineinragen, aber noch nicht in Kontakt mit der Glasschmelze stehen. Je nach Aufbau der Einschmelzwanne können die Thermoelemente beispielsweise 1 m oberhalb der Oberfläche der Glasschmelze die Temperatur messen. Da der Anteil der mit Gemenge bedeckten Glasoberfläche schwanken kann, ist in einer vorteilhaften Ausführungsform vorgesehen, an verschiedenen Stellen über der Oberfläche verteilt Thermoelemente anzuordnen, und zur Messung diejenigen heranzuziehen, welche sich über der konkreten Bedeckung befinden.

Die Temperatur T_{G_BOD} ist die Glastemperatur am Boden unter der freien, also nicht mit Glasrohstoffen bedeckten Oberfläche. Gemessen werden kann diese Temperatur mit durch den Boden der Einschmelzanlage führenden Thermoelementen, deren Spitzen im direkten Glaskontakt angeordnet sind, also zumindest etwas aus dem Boden hervorstehen und beispielsweise 5 cm oder 10 cm in das Volumen der Einschmelzwanne hineinragen. Auch hier sind vorzugsweise mehrere, über die Fläche des Bodens verteilt angeordnete Messelemente vorgesehen, welche einzeln ausgelesen werden können.

Erfindungsgemäß erfolgt das Beheizen der Einschmelzvorrichtung derart, dass die Temperatur der Glasschmelze am Boden T_{G_BOD} unter der freien Oberfläche der Einschmelzvorrichtung und die Temperatur T_{O} der Atmosphäre im Oberofen jeweils mindestens 1.300 °C beträgt, wobei ein vertikaler Temperaturunterschied T_{G_BOD} - T_{O} von mindestens 50°C eingestellt wird und wobei die Temperatur im Glasbad, also in der Glasschmelze, größer ist als die Temperatur oberhalb, so dass gilt: T_{G_BOD} > T_{O}. Ein noch größerer vertikaler Temperaturunterschied ist für das Verfahren noch günstiger. Demnach kann der vertikale Temperaturunterschied T_{G_BOD} - T_{O} wenigstens 100 °C, bevorzugt wenigstens 150 °C, betragen.

In einer sehr günstigen Ausführungsform wird ein sehr niedriger horizontaler Temperaturunterschied in der Einschmelzwanne eingestellt. Dieser betrifft die Temperatur T_{GuG_BOD} der Glasschmelze am Boden unter dem Gemengeteppich und der Temperatur T_{G_BOD} der Glasschmelze am Boden unter der freien Oberfläche. Hiermit kann insbesondere eine bodennahe Rückströmung von aufgeschmolzenem Glas beeinflusst werden.

Die Temperatur T_{GUG_BOD} ist die Glastemperatur unter der mit Glasrohstoffen bedeckten Oberfläche am Boden. Gemessen werden kann diese Temperatur mit durch den Boden der Schmelzanlage führenden Thermoelementen, deren Spitzen im direkten Glaskontakt angeordnet sind, also zumindest etwas aus dem Boden hervorstehen und beispielsweise 5 cm oder 10 cm in das Volumen der Einschmelzwanne hineinragen.

Im Sinne der Erfindung ist es günstig, wenn dieser horizontale Temperaturunterschied zwischen der Temperatur T_{GUG_BOD} der Glasschmelze am Boden unter dem Gemengeteppich und der Temperatur T_{G_BOD} der Glasschmelze am Boden unter der freien Oberfläche weniger als 80 °C beträgt. Auch hierdurch ist es möglich, Dichteunterschied in unterschiedlichen Zonen im Volumen der Einschmelzwanne zu minimieren und damit unerwünschten Strömungen entgegenzuwirken. Hierbei kann bereits eine Reduzierung der Rückströmung einsetzen, so dass sich die Verweilzeit in der Einschmelzwanne verringert. Bevorzugt ist es, wenn dieser Temperaturunterschied weniger als 50 °C, besonders bevorzugt weniger als 20 °C beträgt.

Ein entscheidender Aspekt in der Auslegung und der Verfahrensführung der Einschmelzvorrichtung liegt also darin, die Temperatur der bodennahen Glasschmelze unterhalb des Gemengeteppichs und die Temperatur der bodennahen Glasschmelze unterhalb der freien, also unbedeckten Oberfläche, möglichst einander anzunähern und im Idealfall vollständig anzugleichen.

Der Begriff freie Oberfläche meint in diesem Zusammenhang denjenigen Bereich, welcher erfindungsgemäß im Betrieb nicht mit Glasrohstoffen bedeckt wird und daher im Wesentlichen frei von Glasrohstoffen ist. Nicht ausgeschlossen ist daher, dass eingelegte Glasrohstoffe, beispielsweise Gemenge, durch Strömungen zu einem gewissen Anteil in diesen Bereich gelangen können.

Eine geringe horizontale Temperaturdifferenz im bodennahen Bereich der Glasschmelze ist besonders günstig, um die rückwärts gerichtete Strömungen zu reduzieren. Kritische Pfade können auf diese Weise vermieden und die minimale Verweilzeit der Glasrohstoffe kann erhöht werden.

Das aufgeschmolzene Glas kann sodann aus der Einschmelzwanne diskontinuierlich oder vorzugsweise kontinuierlich abgezogen werden. In einer günstigen Ausführungsform kann das aufgeschmolzene Glas sodann in eine Läutereinrichtung geleitet werden, um dort eine Qualitätsverbesserung durch eine Homogenisierung bzw. eine Reduzierung der Blasen zu erreichen.

Dabei reicht es überraschenderweise aus, wenn die Qualität des Glases im Bereich des Ausleitens der Glasschmelze aus der Einschmelzwanne lediglich einer mittleren Qualität entspricht. Dies bedeutet, dass eine bestimmte Anzahl von Blasen einer bestimmten Größe pro Kilogramm Glas am Auslass bzw. Übergangsbereich als eher unkritisch und im Sinne der Erfindung als akzeptabel angesehen wird.

Bisher war es üblich, insbesondere für die Herstellung von qualitativ hochwertige Glasprodukten, bereits eine möglichst hochqualitative Glasschmelze mit möglichst wenigen Blasen am Auslass der Einschmelzwanne zur Verfügung zu stellen, welches sodann aus der Einschmelzwanne in die Läutereinrichtung geführt werden kann, um die wenigen noch vorhandenen Blasen zu entfernen.

Nunmehr hat sich gezeigt, dass es für die Homogenisierung oder Läuterung der Glasschmelze durchaus günstig sein kann, wenn eine gewisse Anzahl an Blasen mit einer bestimmten Größe in dem eingeleiteten Glas noch vorhanden ist. Die Wirkung der Läuterung kann verbessert werden, wenn die Blasen eine gewisse Größe haben. Bei zu kleine Blasen ist die Wirkung der Läuterung eher gering. Erfindungsgemäß weist die ausgeleitete und in die Läutereinrichtung bzw. die Läuterwanne eingeleitete Glasschmelze weniger als 1000 Blasen/kg, bevorzugt weniger als 900 Blasen/kg und besonders bevorzugt weniger als 800 Blasen/kg mit einem Durchmesser von größer 50 µm auf. Die hier und im folgenden wiedergegebenen Größenangaben beziehen sich dabei auf die Vermessung der Blasen an kalten Glasproben.

Durch die Läuterung kann eine Verminderung der Blasen in dem geläuterten Glas auf weniger als 10 Blasen/kg mit einem Durchmesser von größer 50 µm erfolgen, bevorzugt weniger als 5 Blasen/kg und besonders bevorzugt weniger als 1 Blaselkg. Auch diese Größenangabe bezieht sich auf kalte Glasproben.

Das erfindungsgemäße Verfahren kann zur Herstellung von unterschiedlichen Glasprodukten umfassend Borosilikat-, Alumosilikat- oder Boro-Alumosilikat-Gläser oder Lithium-Aluminium-Silikat-Glaskeramiken verwendet werden. Die Zusammensetzungen des Gemenges und/oder der Glasscherben können dementsprechend ausgewählt werden.

Die Zusammensetzung der Glasrohstoffe kann dabei frei von Läutermitteln sein. Es können aber auch Läutermittel in den dem Fachmann bekannten Dimensionen und Arten beigefügt werden, beispielsweise Arsen, Antimon, Zinn, Cer, Sulfat, Chlorid oder deren beliebige Kombinationen.

Das erfindungsgemäße Verfahren ermöglicht es, über die Temperaturführung eine minimale Verweilzeit tₘᵢₙ der Glasschmelze in der Einschmelzwanne einzustellen. Die Verweilzeit tₘᵢₙ kann experimentell bestimmt werden mittels der vorstehend genannter Tracerversuche. Alternativ kann die minimale Verweilzeit auch mit Hilfe mathematischer Simulationsmodelle berechnet werden.

Diese minimale Verweilzeit tₘᵢₙ kann in Relation gesetzt werden zu der sogenannten mittleren geometrischen Verweilzeit t_{geo}.

Diese mittleren geometrischen Verweilzeit t_{geo} kann berechnet werden aus dem Volumen der Einschmelzwanne und dem durchgesetzten Volumenstrom, also der pro Zeiteinheit aufgegebenen Menge an Glasrohstoffen. Demnach wird die mittlere geometrische Verweilzeit t_{geo} aus dem Verhältnis von Wannenvolumen zu Aufgabevolumen pro Zeiteinheit ermittelt.

Es hat sich als günstig herausgestellt, wenn das Verhältnis einer minimalen Verweilzeit tₘᵢₙ der Glasschmelze in der Einschmelzwanne zu der mittleren geometrischen Verweilzeit t_{mg} der Glasschmelze in der Einschmelzwanne t_{mg}/tₘᵢₙ maximal 6, bevorzugt maximal 4, besonders bevorzugt maximal 3 beträgt.

In diesem Zusammenhang ist auch der absolute Wert der mittleren geometrischen Verweilzeit t_{geo} zu sehen, welche günstigerweise weniger als 100 h beträgt und damit für einen hohen Wannendurchsatz sorgt. Es können sogar mittlere geometrische Verweilzeit t_{geo} von weniger als 70 h und besonders bevorzugt weniger als 40 h eingestellt werden.

Das Erwärmen der Glasrohstoffe in der Einschmelzvorrichtung kann dem Fachmann bekannte elektrische und/oder fossile Heizeinrichtungen umfassen, wobei die Erfindung besonders geeignet ist für Einschmelzvorrichtungen mit fossiler Beheizung im Oberhofen, vorzugsweise in Verbindung mit einer elektrischen Zusatzheizung. Bekannt ist beispielsweise, im Oberofen Gasbrenner einzusetzen zum Erwärmen der Glasschmelze.

Eine Erwärmung allein über im Oberofen angeordnete Heizeinrichtungen hat sich für die vorliegende Erfindung als eher ungünstig herausgestellt, da der Temperatureintrag in die Glasschmelze ungleichmäßig ist und nur von der Oberfläche aus in Richtung Tiefe erfolgt, wodurch sich die oben genannten Rückströmungen innerhalb des Volumens ausbilden können.

Weiterhin hängt in diesem Fall, also einer reinen Beheizung von oben aus dem Oberofen, der Temperatureintrag mit dem Bedeckungsgrad der Glasschmelze mit aufgegebenen Glasrohstoffen zusammen und ist in Bereichen, in denen keine Bedeckung vorliegt, ungünstiger als in den freien Bereichen. Dies kann zu einer starken vertikalen Strömung an dem Übergangsbereich zwischen einer bedeckten und einer freien Oberfläche führen, wodurch sich in der Glasschmelze Rotationswalzen um eine horizontale Achse ausbilden können, welche sich ebenfalls als ungünstig für das Strömungsverhalten insgesamt herausgestellt haben. Eine an diesem Übergangsbereich sich ausbildende Strömung kann dazu führen, dass ein Transport von Glasschmelze in Flussrichtung deutlich erschwert wird. Hierdurch kann der Wannendurchsatz ungünstig beeinflusst werden.

In einer vorteilhaften Ausführungsform umfasst die Heizeinrichtung daher weiterhin eine elektrische Beheizung, vorzugsweise eine elektrische Zusatzheizung, welche eine genauere Regelung des Energieeintrages und damit eine homogenere und bessere Temperaturführung in der Glasschmelze ermöglicht. Die elektrische Beheizung kann beispielsweise Elektroden umfassen.

Erfindungsgemäß kann für die elektrische Beheizung von Vorteil eine flächenhafte elektrische Beheizung vorgesehen sein, welche vorzugsweise sogenannte Seiten-, Block- oder Platten-Elektroden umfassen kann und damit einen besonders gleichmäßigen Wärmeeintrag ermöglicht. Diese elektrische Flächenheizung kann von Vorteil auch an der Seitenwand der Einschmelzwanne, vorzugsweise in unterschiedlichen Höhen in der Glasschmelze, angeordnet sein, um den Temperatureintrag gezielt zu steuern, etwa in Abhängigkeit von der konkreten Ausdehnung und Dicke des Gemengeteppichs.

Die Seiten-, Block- oder Platten-Elektroden können aus den dem Fachmann bekannten Materialien gefertigt sein bzw. diese umfassen, vorzugsweise Molybdän, Wolfram, Zinnoxid, Platinlegierungen, oder auch andere üblicherweise eingesetzten Materialien.

In einer vorteilhaften Ausführungsform ist die Heizeinrichtung demnach so ausgebildet, dass das Erwärmen der Glasschmelze zumindest unter der mit den Glasrohstoffen bedeckten Oberfläche elektrisch erfolgt.

Hierdurch kann auf einen Einsatz von Blasdüsen und/oder Stabelektroden im Volumen der Glasschmelze verzichtet werden, welche zu einem punktuellen Wärmeeintrag und damit zu ungünstigen Strömungsverhältnissen führen können. Eine Verwendung von Stabelektroden etwa in der Nähe der Seitenwände ist davon unbenommen.

Eine für die Durchführung des Verfahrens geeignete Einschmelzvorrichtung gemäß Anspruch 16 kann ferner dem Fachmann bekannte weitere Komponenten aufweisen. Die Einschmelzvorrichtung kann daher weiterhin umfassen:
- einen Einlegebereich, vorzugsweise mit einer Zuführeinrichtung für das Einlegen der Glasrohstoffe, umfassend Gemenge und/oder Glasscherben,
- eine Ausleiteinrichtung zum Ausleiten der Glasschmelze, vorzugsweise einen Durchfluss,
- Elektroden zur elektrischen Beheizung, vorzugsweise Seiten-, Block- oder Plattenelektroden,
- einen Brückenwall,
- einen tauchenden Sperrriegel, welcher mit oder ohne Trennung im Oberofen ausgebildet ist.

Diese Aufzählung ist rein beispielhaft und nicht als abschließend anzusehen.

Mit von der Erfindung umfasst ist weiterhin eine Einschmelzvorrichtung zur vorzugsweise kontinuierlichen Herstellung von Glasprodukten aus einer Glasschmelze, vorzugsweise zur Herstellung von Glasprodukten umfassend Borosilikat-, Alumosilikat- oder Boro-Alumosilikat-Gläser oder Lithium-Aluminium-Silikat-Glaskeramiken, umfassend:
- eine Einschmelzwanne zum Erzeugen einer Glasschmelze aus Glasrohstoffen und einen Oberofen,
- eine Zuführeinrichtung für das Einlegen der Glasrohstoffe, wobei die Zuführung derart erfolgt, dass zumindest ein Teil der Oberfläche des Einschmelzbereiches der Einschmelzvorrichtung mit den zugeführten Glasrohstoffen bedeckt werden kann,
- eine Heizeinrichtung zum Erwärmen der Glasschmelze derart, dass die Temperatur T_{G_BOD} der Glasschmelze am Boden unter der freien Oberfläche der Einschmelzvorrichtung und die Temperatur T_{O} der Atmosphäre im Oberofen jeweils mindestens 1.300 °C beträgt, wobei ein vertikaler Temperaturunterschied T_{G_BOD} - T_{O} von mindestens 50°C eingestellt wird, und wobei die Temperatur der Glasschmelze am Boden größer ist als die Temperatur der Atmosphäre im Oberofen, so dass gilt: T_{G_BOD} > T_{O} und
- eine Ausleiteinrichtung zum Ausleiten der Glasschmelze aus der Einschmelzwanne, wobei die ausgeleitete Glasschmelze vorzugsweise weniger als 1000 Blasen/kg mit einem Durchmesser von größer 50 µm aufweist.

Von Vorteil kann weiterhin eine Läutereinrichtung zum Homogenisieren oder Läutern der ausgeleiteten Glasschmelze vorgesehen sein. In dieser Läutereinrichtung kann eine Verminderung der Blasen in dem geläuterten Glas auf weniger als 10 Blasen/kg mit einem Durchmesser von größer 50 µm erfolgen, bevorzugt auf weniger als 5 Blasen/kg und besonders bevorzugt auf weniger als 1 Blase/kg mit einem Durchmesser von größer 50 µm.

Die Heizeinrichtung kann fossile und/oder elektrische Heizeinrichtungen umfassen, wobei elektrische Zusatzheizungen von Vorteil sind. Von Vorteil wird die eingebrachte Energie also mittels einer Kombination aus fossilen und elektrischen Heizeinrichtungen eingebracht; eine rein fossile oder eine rein elektrische Beheizung wird als nicht günstig erachtet. Diese Kombination ermöglicht es in hervorragender Weise, einen hohen Energieeintrag, etwa mittels fossiler Beheizung im Oberofen, mit einem sehr präzise steuerbaren Energieeintrag, etwa mittels elektrische Beheizung über die Seitenwände, zu realisieren, und damit sicher die gewünschten Temperaturverteilungen zu erreichen. Damit ergänzen sich die Vorteile beider Heizeinrichtungen ideal.

Die Erfinder haben herausgefunden, dass eine besonders präzise Temperaturführung dann möglich ist, wenn der Energieeintrag zum Erwärmen der Glasschmelze mittels elektrischer und fossiler Beheizung in einem bestimmten Verhältnis zueinander erfolgt. Von Vorteil erfolgt daher wenigstens 25 % und höchstens 75 % des Energieeintrags mittels elektrischer Heizeinrichtungen, bevorzugt wenigstens 30 % und höchstens 70 % und besonders bevorzugt wenigstens 40 % und höchstens 60 %. Der zu 100 % fehlende Anteil des Energieeintrags kann dann mittels fossiler Heizeinrichtungen erbracht werden.

Für die elektrische Beheizung kann daher eine flächenhaft wirkende elektrische Beheizung vorgesehen sein, welche vorzugsweise Seiten-, Block- oder Platten-Elektroden umfassen kann und damit einen gleichmäßigen Wärmeeintrag und eine homogene Temperaturverteilung in der Glasschmelze ermöglicht. Diese können von Vorteil auch an der Seite der Einschmelzwanne angeordnet sein, um den Temperatureintrag zu verbessern und eine möglichst homogene horizontale Temperaturverteilung, insbesondere im bodennahen Bereich der Einschmelzwanne, zu begünstigen.

In einer vorteilhaften Ausführungsform ist die Heizeinrichtung so ausgebildet, dass das Erwärmen der Glasschmelze unter der mit den Glasrohstoffen bedeckten Oberfläche elektrisch erfolgt.

Die Zuführeinrichtung kann eine Einlegemaschine zur Zuführung und Einlegung von Glasrohstoffen, also von Gemenge und/oder Glasscherben, umfassen und ist dabei vorzugsweise so ausgelegt, dass ein großer Teil der Oberfläche des Einschmelzbereiches der Einschmelzvorrichtung mit den zugeführten Glasrohstoffen bedeckt werden kann. Die Zuführung der Glasrohstoffe kann mittels dem Fachmann bekannten Einrichtungen oder Einlegemaschinen erfolgen, also beispielsweise Schraubeneinleger, Schubeinleger, Vibrationsrinnen, Pusher, oder andere üblicherweise verwendete Einrichtungen umfassen.

Auf diese Weise wird ein Großteil der Oberfläche mit Glasrohstoffen bedeckt, vorzugsweise mehr als 30 %, bevorzugt mehr als 40 % und besonders bevorzugt mehr als 50 % der zur Verfügung stehenden Oberfläche.

Die Erfindung ermöglicht es, bei bestehenden Einschmelzvorrichtungen den Durchsatz zu erhöhen, oder aber, insbesondere für die Auslegung neuer Einschmelzvorrichtungen, diese bei gleichem Durchsatz kleiner zu gestalten und damit letztendlich die mittlere oder geometrische Verweilzeit des Gemenges in der Schmelzvorrichtung zu reduzieren. Auf diese Weise kann der Wannendurchsatz gesteigert werden, d.h. die Menge des abgezogenen Glases in Bezug zu dem Volumen der Schmelzwanne.

Die Qualität der erzeugten Glasprodukte verschlechtert sich durch das Verfahren nicht, d.h. die Ausbeute verbleibt zumindest gleich. In verschiedenen Versuchen konnte gezeigt werden, dass eine deutliche Verbesserung der Glasqualität möglich ist, wenn bei ansonsten gleichen Randbedingungen der Bedeckungsgrad auf 30 % oder mehr gesteigert wird.

Erfindungsgemäß wird daher ein hocheffizientes Verfahren zum Einschmelzen von Glas und zur Herstellung hochwertiger Glasprodukte bereitgestellt.

Die Zeit für das Aufschmelzen des Gemenges und/oder der Scherben kann signifikant reduziert werden, so dass in Bezug auf ein gegebenes Einschmelzvolumen der Durchsatz erhöht werden kann. In einer bevorzugten Ausführungsform kann die Zeit für das Aufschmelzen konkret vorgegeben und eingestellt werden.

Die Erfindung wird nachfolgend anhand bevorzugter Ausführungsformen und unter Bezugnahme auf die beigefügten Figuren detaillierter beschrieben.

### Die Zeichnungen zeigen:

- Fig. 1-4: Ausführungsbeispiele, welche die erfindungsgemäß erreichbare Blasigkeit und Temperaturverteilung zeigen,
- Fig. 5: exemplarisch eine Einschmelzvorrichtung in einem Längsschnitt,
- Fig. 6: schematisch eine Einschmelzvorrichtung in einem Längsschnitt in einer weiteren Ausführungsform,
- Fig. 7: schematisch eine weitere Ausführungsform einer Einschmelzvorrichtung in einem Längsschnitt mit einer Einschmelzwanne und einer Läuterwanne,
- Fig. 8: eine weitere Ausführungsform einer zweiteiligen Einschmelzvorrichtung mit Seitenelektroden in einer Draufsicht,
- Fig. 9: die Einschmelzvorrichtung aus Fig. 8 in einem Längsschnitt,
- Fig. 10: eine weitere Ausführungsform einer zweiteiligen Einschmelzvorrichtung mit Seitenelektroden, welche über eine Einschmelzleistung von mehr als 25 Tonnen/Tag verfügt, wobei Elektroden in einer Queranordnung in der Einschmelzwanne vorgesehen sind, in einer Draufsicht,
- Fig. 11: die Ausführungsform aus Fig. 10 in einem Längsschnitt,
- Fig. 12: eine weitere Ausführungsform einer zweiteiligen Einschmelzvorrichtung mit Seitenelektroden, welche über eine Einschmelzleistung von mehr als 25 Tonnen/Tag verfügt, wobei Elektroden in einer Längsanordnung in der Einschmelzwanne vorgesehen sind, in einer Draufsicht, und
- Fig. 13: die Ausführungsform aus Fig. 12 in einem Längsschnitt.

### Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen. Zur besseren Verdeutlichung der Erfindung sind die in den Figuren dargestellten bevorzugten Ausführungsformen jedoch nicht immer maßstabsgerecht gezeichnet.

Das erfindungsgemäße Verfahren zur vorzugsweise kontinuierlichen Herstellung von Glasprodukten aus einer Glasschmelze, umfasst die folgenden Schritte:
- Bereitstellen von Glasrohstoffen, insbesondere Gemenge und/oder Glasscherben,
- Erwärmen der Glasrohstoffe in einer Einschmelzvorrichtung, wobei die Einschmelzvorrichtung eine Einschmelzwanne zum Erzeugen einer Glasschmelze aus den Glasrohstoffen und einen Oberofen umfasst, wobei zumindest ein Teil der Oberfläche des Einschmelzbereiches der Einschmelzvorrichtung mit den Glasrohstoffen bedeckt ist und zumindest ein kleiner Teil der Oberfläche des Einschmelzbereiches nicht bedeckt ist,
- Beheizen der Einschmelzvorrichtung derart, dass die Temperatur T_{G_BOD} der Glasschmelze am Boden unter der freien Oberfläche der Einschmelzvorrichtung und die Temperatur T_{O} der Atmosphäre im Oberofen jeweils mindestens 1.300 °C beträgt, wobei ein vertikaler Temperaturunterschied T_{G_BOD} - T_{O} von mindestens 50°C eingestellt wird, und wobei die Temperatur der Glasschmelze am Boden größer ist als die Temperatur der Atmosphäre im Oberofen, so dass gilt: T_{G_BOD} > T_{O}
- Ausleiten der Glasschmelze aus der Einschmelzwanne, wobei die ausgeleitete Glasschmelze vorzugsweise weniger als 1000 Blasen/kg mit einem Durchmesser von größer 50 µm aufweist.

Das vorliegende Verfahren beruht auf der Optimierung des Energieeintrags mit dem Ziel, die Strömungsverhältnisse während des Aufschmelzens der Glasrohstoffe derart zu verbessern, dass der Wannendurchsatz gesteigert werden kann.

Mit dem Energieeintrag werden ganz wesentliche Parameter einer Einschmelzvorrichtung für Glas beeinflusst. In der nachfolgend dargestellten Tabelle 1 werden verschiedene wichtige Parameter für exemplarisch ausgewählte Einschmelzvorrichtungen gegenübergestellt. Diese Parameter sind:
- DS:: Durchsatz, gemessen in Tonnen/Tag [t/d],
- SF:: Schmelzfläche, Oberfläche des für die Glasschmelze zur Verfügung stehenden Volumens der Einschmelzwanne, gemessen in m²,
- Spez. SF:: Spezifische Schmelzfläche [t/m²/d],
- tₘᵢₙ:: Minimale Verweilzeit der Schmelzanlage in Stunden [h], definiert die Zeit zwischen Eingabe der Tracersubstanz und erster Konzentrationserhöhung an der Ausleitstelle,
- t_{geo}:: Mittlere geometrische Verweilzeit der Schmelzanlage in Stunden [h], berechnet aus dem Wannenvolumen und dem durchgesetzten Volumenstrom,
- t_{geo/}t_{min:}: Verhältnis der minimalen Verweilzeit tₘᵢₙ der Glasschmelze in der Einschmelzwanne zu der mittleren geometrischen Verweilzeit t_{mg} der Glasschmelze in der Einschmelzwanne.

**Tabelle 1: Durchsatz, Schmelzfläche und Verweilzeiten ausgewählter Einschmelzwannen**

| | DS | SF | Spez. SF | | tₘᵢₙ | t_{geo} | t_{geo}/tₘᵢₙ |
|---|---|---|---|---|---|---|---|
| Bezeichnung des Aggregates | [t/d] | [m2] | [t/m²/d] | | [h] | [h] | |
| | | | | | | | |
| Schippan | | | | | | | |
| Wanne A 1) | 234 | 75 | 3,12 | | 8 | 34 | 4,3 |
| B1 | " | " | " | | 8 | 31,7 | 4,0 |
| B2 | " | " | " | | 7 | 31,5 | 4,5 |
| B3 | " | " | " | | 7 | 31,8 | 4,5 |
| B4 | | | | | | | |
| Schippan | | | | | | | |
| Wanne B 1) | 355 | 96,4 | 3,68 | | 2-2,5 | 22,8 | 9,1-11,4 |
| 2/0 | " | " | " | | 2,5- | 21,5 | 6,1-8,6 |
| 2/1 | " | " | " | | 3,5 | 22 | 6,3 |
| 2/2 | | | | | 3,5 | | |
| Schippan Wanne C | | | | | | | |
| 1) | 280 | 94 | 2,98 | | 4 | 19,5 | 4,9 |
| H1 - 3/1 | " | " | " | | 4 | 26,5 | 6,6 |
| H1 - 3/2 | " | " | " | | 10 | 38 | 3,8 |
| H1 - 3/3 | " | " | " | | 6 | 29,5 | 4,9 |
| H3 - 3/1 | " | " | " | | 5 | 29,5 | 5,9 |
| H3 - 3/2 | " | " | " | | 9 | 34,5 | 3,8 |
| H3 - 3/3 | " | " | " | | 6 | 31 | 5,2 |
| H5 - 3/1 | " | " | " | | 5 | 26,5 | 5,3 |
| H5 - 3/2 | " | " | " | | 7 | 27 | 3,9 |
| H5 - 3/3 | | | | | | | |
| Schippan Wanne D | | | | | | | |
| 1) | 330 | 94 | 3,51 | | 4,5 | 23,3 | 5,2 |
| H1 - 3/1 | " | " | " | | 5,5 | 32 | 5,8 |
| H1 - 3/2 | " | " | " | | 14 | 40 | 2,9 |
| H1 - 3/3 | " | " | " | | 4,5 | 24,3 | 5,4 |
| H2 - 3/1 | " | " | " | | 4,5 | 24,8 | 5,5 |
| H2 - 3/2 | " | " | " | | 8,5 | 31,6 | 3,7 |
| H2 - 3/3 | " | " | " | | 5,5 | 31 | 5,6 |
| H5 - 3/1 | " | " | " | | 4,5 | 24 | 5,3 |
| H5 - 3/2 | " | " | " | | 7 | 33 | 4,7 |
| H5 - 3/3 | | | | | | | |
| TECO 2) | 272 | 84 | 3,2 | | -- | 42 | - |
| Trier 3) | 106,5 | 133 | 0,8 | | 6,5 | 65 | 10 |
| VES 4) Rasothermglas | 14 | 7,5 | 1,9 | | 4-5 | ca. 35 | 7-8,8 |
| Oberland W7 5) | 246 | 71 | 3,5 | | 4,5 | 19,5 | 4,3 |
| | 220 | 71 | 3,1 | | 4-5 | 21,8 | 4,4-5,5 |

Die aufgeführten Angaben entstammen den folgenden Druckschriften:
1) Schippan, D.: Untersuchung des reaktionstechnischen Verhaltens in Behälterglaswannen mit Tracerversuchen,
   von der Fakultät für Bergbau, Hüttenwesen und Geowissenschaften der Rheinisch-Westfälischen Technischen Hochschule Aachen genehmigte Dissertation, 2003;
   Wanne A: S. 72, 75 u. 77-84
   Wanne B: S. 92, 95, 102-103
   Wanne C: S. 109, 111, 116, 120, 122
   Wanne D: S. 124
2) Tecoglas, W.R. Seitz, C.W. Hibscher: "Design Considerations for All-electric Melters", 41st Conference on Glass Problems, Nov. 1980, Columbus, Ohio
3) Trier, W.: Glasschmelzöfen - Konstruktion und Betriebsverhalten, Springer-Verlag 1984,
4) Hippius, W., Linz, H.-J., Philipp, G.: "Untersuchung von Abhängigkeiten zwischen Verweilzeitverteilung des Glases im Schmelzaggregat und technologischen Parametern bei der vollelektrischen Schmelze", in: Fundamentals of Glass Science and Technology 1993, Proceedings of the Second Conference of the European Society of Glass Science and Technology; Venice, Italy, 21-24 June 1993
5) Bauer, J.: "Verweilzeitanalysen an einer Glasschmelzwanne",

### HVG-Mitteilung Nr. 1903, Frankfurt

Die in der Übersicht dargestellten Beispiele wichtiger Parameter für Einschmelzwannen zeigen kleinere und größere Aggregate, etwa mit einem Durchsatz von 14 t/d (VES Rasothermglas) bis hin zu Groß-Anlagen mit einem Tagesdurchsatz von bis zu 355 t/d (Schippan B 2/0). In den ausgewählten Anlagen werden unterschiedliche Gläser geschmolzen und zu unterschiedlichen Glasprodukten verarbeitet. Von daher gehen in die Betrachtung beispielsweise Floatglas-Anlagen ein, aber auch kleinere Anlagen beispielsweise zur Herstellung von Borosilikatglas-Artikeln.

Die minimale Verweilzeit tₘᵢₙ liegt bei wenigstens 2 h bis hin zu Aggregaten mit über 11 h; die geometrischen Verweilzeiten t_{geo} liegen bei Werten zwischen 19,5 h bis hin zu über 60 h. Daraus resultieren Verhältniswerte t_{geo}/tₘᵢₙ von 3,7 bis hin zu Werten wie 10.

Hierbei ist allerdings zu berücksichtigen, dass die erreichbaren Werte immer in Kombination zu den erreichbaren Glasqualitäten zu sehen sind. Die als Beispiele erwähnten Anlagen mit kleinen Werten erreichen dabei nicht die geforderten Glasqualitäten, wie es insbesondere ein Anliegen der vorliegenden Erfindung ist. Eine alleinige Steigerung des Durchsatzes ohne gleichbleibende Qualität führt letztendlich zu einer geringeren Effizienz des Einschmelzens.

Die Temperaturverteilung in den ausgewählten beispielhaften Einschmelzvorrichtungen aus Tabelle 1 zeigt die Tabelle 2. In der Tabelle 2 zusammengefasst sind die folgenden Werte:
T_{GuG}: Glastemperatur unter dem Gemenge. Gemessen mittels Tauch-Thermoelementen von oben 20 cm durch das Gemenge hindurch oder ersatzweise berechnet mit Hilfe mathematischer Simulationsmodelle.
T_{GuG_Bod}: Glastemperatur unter dem Gemenge am Boden. Gemessen mit durch den Boden der Schmelzanlage führenden Thermoelementen, deren Spitzen im direkten Glaskontakt angeordnet sind.
T_{G_OF}: Glastemperatur an der freien Glasbad-Oberfläche, also ohne Gemengebedeckung. Gemessen mittels Tauch-Thermoelementen von oben oder mittels Pyrometern mit Wellenlängen geringer Glas-Eindringtiefe.
T_{G_Bod}: Glastemperatur am Boden unter der freien Glasbad-Oberfläche. Gemessen mit, durch den Boden der Schmelzanlage führenden, Thermoelementen deren Spitzen im direkten Glaskontakt angeordnet sind.
T_{O}: Oberofen-Temperatur (= Gewölbetemperatur) im Bereich oberhalb der mit Gemenge bedeckten Glasoberfläche. Gemessen mit, durch das Gewölbe (oder die Seitenwand) der Schmelzanlage führenden, Thermoelementen deren Spitzen bis in den Ofenraum ragen.

**Tabelle 2: Temperaturen der Beispielwannen**

| | T_{O} | T_{GuG} | T_{GuG_Bod} | T_{G_OF} | T_{G_Bod} |
|---|---|---|---|---|---|
| | [°C] | [°C] | [°C] | [°C] | [°C] |
| | | | | | |
| Schippan Wanne A 1) | 1450-1500 | -- | 1250 | 1550-1590 | 1250-1260 |
| Schippan Wanne B 1) | -- | -- | 1200-1300 | 1550 | 1300 |
| Schippan Wanne C 1) | 1545-1560 | -- | 1055 | 1565-1595 | 1080-1090 |
| Schippan Wanne D 1) | 1545-1560 | -- | 1055 | 1565-1595 | 1080-1090 |
| TECO 2) | 50 | 1345 - 1425 | 1380-1410 | -- | -- |
| Trier 3) | -- | -- | -- | -- | -- |
| VES 4) Rasothermglas | kalt | -- | -- | -- | -- |
| Oberland W7 5) | -- | -- | -- | -- | -- |

In der nachfolgenden Tabelle 3 sind erfolgreiche Ausführungsbeispiele für erfindungsgemäße Einschmelzvorrichtungen mit wichtigen Kenngrößen zusammengefasst, welche demnach die Lehre zum Handeln wiederspiegeln. Dargestellt sind u.a.:
Blasigkeit_SW: Glasqualität in Blasen/kg am Auslass des Einschmelzbereiches bzw. der Einschmelzwanne. In die Bewertung eingegangen sind Blasen mit einer Größe, wobei hierunter die größte Ausdehnung einer Blase in einer Richtung zu verstehen ist, von etwa 50 µm oder größer und höchstens 1.000 µm.
Blasigkeit_LW: Glasqualität in Blasen/kg am Auslass des Läuterbereiches bzw. der Läuterwanne.
Belegung_SW: Flächenanteil der Bedeckung der Oberfläche des Einschmelzbereiches bzw. der Einschmelzwanne mit Gemenge in % der Gesamtfläche des Einschmelzbereiches bzw. der Einschmelzwanne.

Die dargestellten Ausführungsbeispiele 1-5 beziehen sich auf die Herstellung von Glasprodukten unterschiedlicher Glasarten. Die Tagesdurchsätze der dargestellten Ausführungsbeispiele 1-4 sind eher klein, worauf auch die eher kleinen Schmelzflächen hindeuten. Der Belegungsgrad Belegung_SW wurde in den Ausführungsbeispielen relativ hoch gewählt und beträgt wenigstens 40 % oder mehr und geht bis zu 60 %, d.h. mehr als die Hälfte der zur Verfügung stehenden Oberfläche ist mit Glasrohstoffen belegt.

Hieraus resultiert ein hervorragend niedriges Verhältnis der Verweilzeiten t_{geo/}tₘᵢₙ, welches im Maximum bei 3,1 liegt und hinuntergeht bis zu einem Wert von 1,9 und sich damit einem Idealwert von 1,0 sehr stark annähert.

Die Glasqualität am Ende des Einschmelzbereiches liegt in einem Bereich von 300 Blasen/kg, zum Teil auch deutlich darunter. In den Ausführungsbeispielen ist vorgesehen, das Glas einer Läuterung zuzuführen. Diese erfolgt bei einer Temperatur von 1.640 °C (Beispiel 1-4) bzw. von 1.600 °C (Beispiel 5). Es zeigt sich, dass eine sehr hohe Qualität nach der Läuterung von weniger als 1 Blase/kg, bevorzugt von weniger als 0,1 Blase/kg erreicht werden kann.

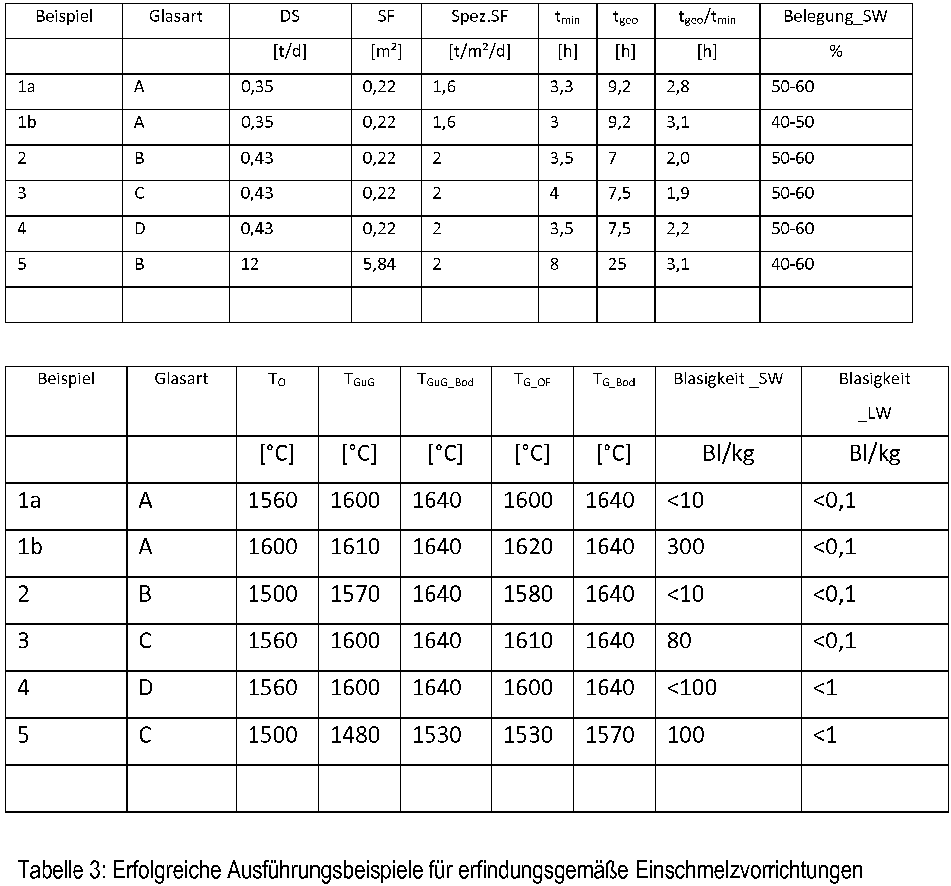

Schließlich sind in der Tabelle 4 weitere Ausführungsbeispiele zusammengefasst, welche nicht erfolgreich waren. Hier wurde ein deutlich niedrigerer Bedeckungsgrad gewählt, welcher etwa zwischen 10 % und 30 % liegt. Es zeigt sich, dass das Verhältnis t_{geo}/tₘᵢₙ im Wesentlichen deutlich ungünstiger ausfällt. Bei einem Belegungsgrad von 10-20 % kann zum Beispiel lediglich Verhältnis t_{geo}/tₘᵢₙ von 6,1 erreicht werden.

Auch die erreichbare Glasqualität ist deutlich schlechter, obwohl ebenfalls eine Läuterung bei einer Temperatur von 1.640 °C durchgeführt wurde. Hier kann beobachtet werden, dass die Blasigkeit, also die Anzahl der Blasen/kg gemessen am Auslass des Einschmelzbereiches bzw. der Einschmelzwanne, mehrere Zehner Potenzen über derjenigen aus den erfolgreichen Ausführungsbeispielen liegt, im günstigsten Fall bei ca. 8.000 Blasen/kg, aber auch bis zu 100.000 Blasen/kg. Auch im Glas nach der Läuterung finden sich deutlich mehr als 1 Blase/kg.

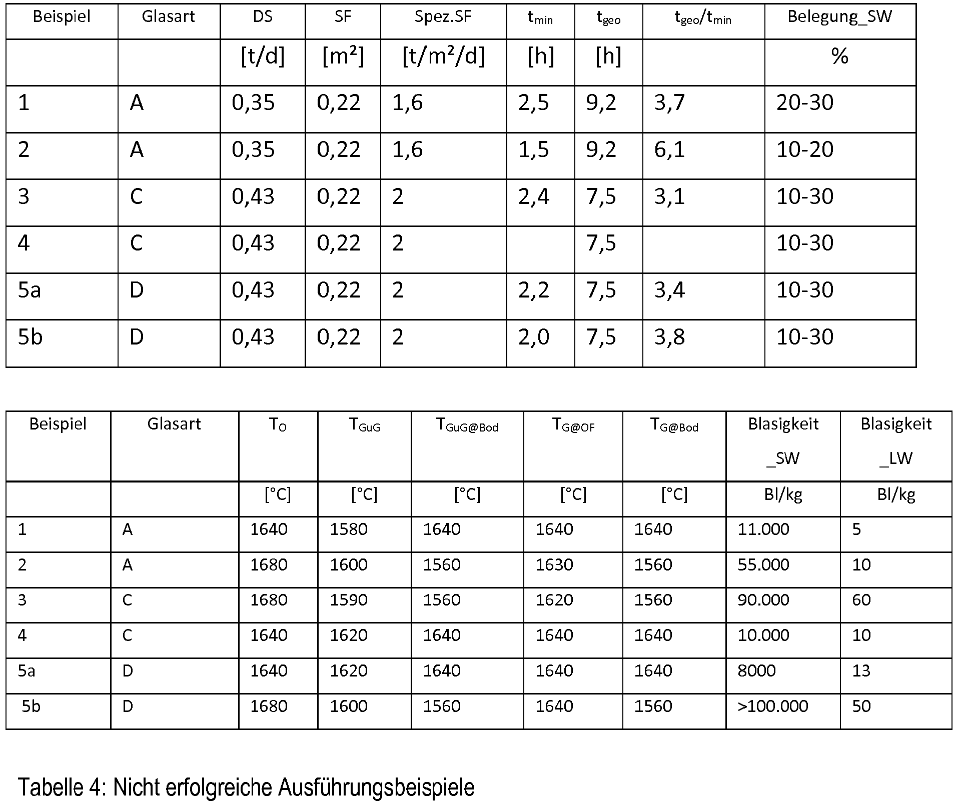

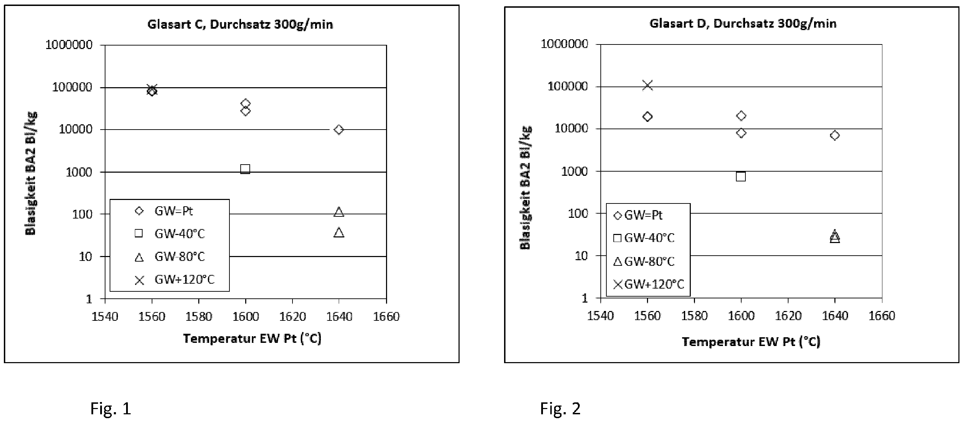

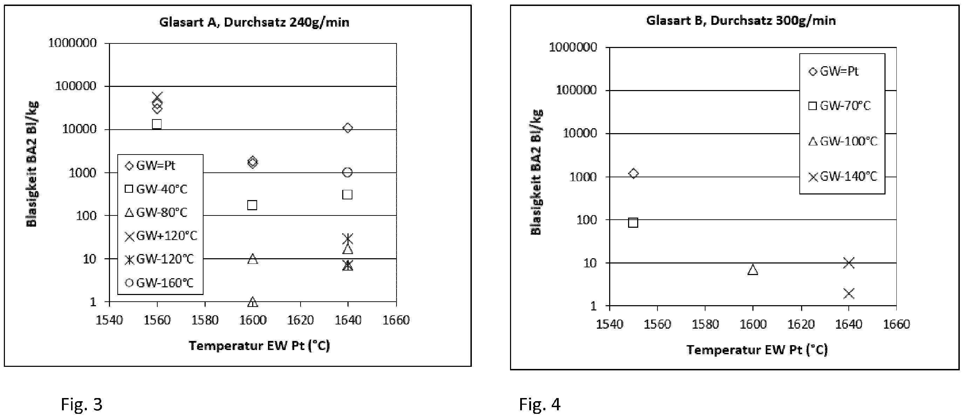

Bevorzugte Ausführungsbeispiele sind in den Figuren 1-4 dargestellt. Dabei zeigen die Figuren 1 bis 4 Ausführungsbeispiele, welche die erfindungsgemäß erreichbare Blasigkeit und Temperaturverteilung zeigen für die ausgewählten Glasarten A, B, C und D gemäß den Tabellen 3 und 4.

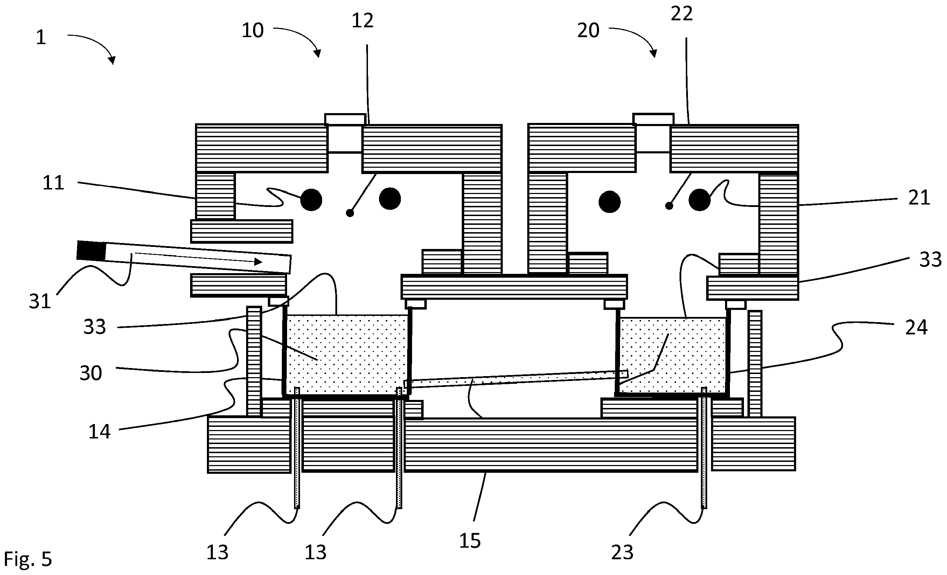

Die nachfolgenden Figuren 5 bis 13 zeigen Ausführungsbeispiele erfindungsgemäßer Einschmelzvorrichtungen.

Fig. 5 zeigt exemplarisch eine im Ganzen mit dem Bezugszeichen 1 bezeichnete Einschmelzvorrichtung in einem Längsschnitt. Die rein beispielhaft ohne Begrenzung auf dieses Ausführungsbeispiel dargestellte Einschmelzvorrichtung 1 ist zweiteilig ausgebildet und umfasst in dieser Ausführungsform eine Einschmelzwanne 10 sowie eine Läuterwanne 20, wobei beide Wannen jeweils über einen baulich getrennten Oberofen 12, 22 verfügen. Im Bereich des Oberofens 12, 22 sind Gasbrenner 11, 21 angeordnet, welche an einer Seitenwand des Oberofens 11, 21 befestigt sind. Im Beispiel sind der Übersichtlichkeit halber nur jeweils zwei Gasbrenner 11, 21 eingezeichnet. Selbstverständlich ist auch eine andere Anzahl an Gasbrennern 11, 21 möglich und bei größer dimensionierten Einschmelzvorrichtungen 1 auch angezeigt, wobei sich die Anzahl und die Anordnung nach dem gewünschten Energieeintrag und/oder der Geometrie und Dimension des Oberofens 12, 22 richtet.

Schematisch gezeigt ist eine Zuführeinrichtung 31, mit welcher Glasrohstoffe in den Einlegebereich, der in diesem Beispiel in die Einschmelzwanne 10 integriert ist, eingebracht werden können. Die Einschmelzwanne 10 definiert ein Volumen, welches zum Einschmelzen der aufgegebenen Glasrohstoffe ausgebildet ist. Im abgebildeten Beispiel ist dieses Volumen 14 mit der Glasschmelze 30, also mit zumindest teilweise aufgeschmolzenen Glasrohstoffen, gefüllt. Im mit Glasrohstoffen gefüllten Stadium bildet die Oberfläche des Volumens 14 die sogenannte Glaslinie 33.

Die Einschmelzwanne 10 ist im Beispiel ferner mit zwei Bodenabläufen 13 ausgestattet, welche es erlauben, flüssige Glasschmelze nach unten abzuziehen.

Auch die Läuterwanne 20 verfügt über ein Volumen 24 zur Aufnahme von Glasschmelze 30. Beide Volumen 14, 24 sind über eine Zuleitung 15, auch als Durchfluss bezeichnet, miteinander verbunden. In dem Beispiel ist auch die Läuterwanne 20 mit einem Bodenablauf 23 ausgebildet, über den homogenisierte und geläuterte Glasschmelze abgezogen werden kann.

Mit der in Fig. 5 abgebildeten Einschmelzvorrichtung 1, umfassend die Einschmelzwanne 10 und die Läuterwanne 20, wurden die Kenngrößen der in den vorstehend gezeigten Tabellen 3 und 4 dargestellten erfolgreichen (Beispiel 1a-4) und nicht erfolgreichen Beispiele (Beispiel 6-10b) für die Temperatur- und Verfahrensführung der Einschmelzvorrichtung ermittelt.

Die in den Tabellen gezeigten Beispiele beschreiben die Unterschiede in den Glasqualitäten der untersuchten Glasarten bei gleichen Schmelzleistungen, aber unterschiedlichen Prozesstemperaturen.

Die erfolgreichen Beispiele 1a bis 4 zeigen im Vergleich zu den nicht erfolgreichen Beispielen 6 bis 10b, dass bei einer gleichen Baugröße der Einschmelzvorrichtung 1 bei Anwendung der erfindungsgemäß optimalen Temperaturen eine Laststeigerung um den Faktor 2 oder sogar noch mehr erreicht werden kann. Bei einer erfindungsgemäßen Temperatur- bzw. Verfahrenssteuerung der Einschmelzvorrichtung 1 kann demnach die spezifische Schmelzleistung von etwa 0,8 t/m²/d auf eine spezifische Schmelzleistung von über 2 t/m²/d gesteigert werden.

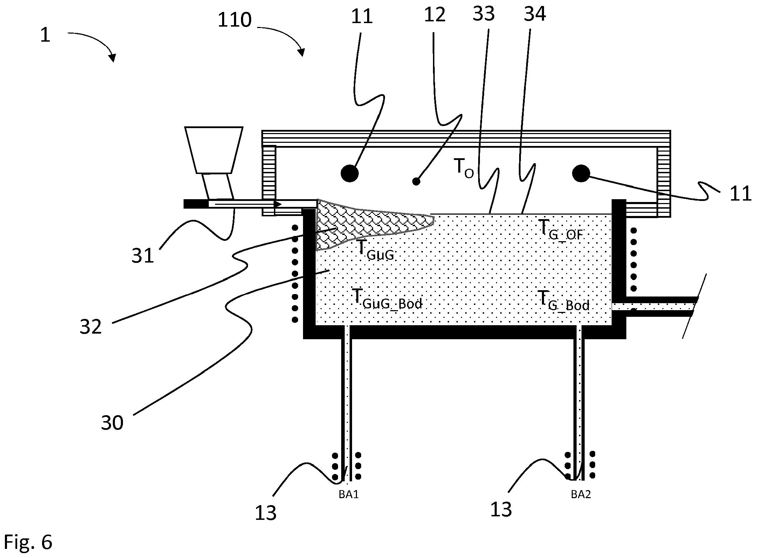

Fig. 6 zeigt schematisch eine Einschmelzvorrichtung 1 in einem Längsschnitt einer weiteren Ausführungsform einer Einschmelzwanne 110 zur Erläuterung der Prozessführung als Prozessleitbild. Über eine Zuführeinrichtung 31 werden Glasrohstoffe in die Einschmelzwanne 110 eingefüllt, welche im Einlegebereich einen Gemengeteppich 32 ausbilden. Dieser Gemengeteppich 32 bedeckt die Oberfläche der Glasschmelze in Höhe der Glaslinie 33 teilweise. Im abgebildeten Beispiel ist die Oberfläche etwa zu 1/3 mit eingelegten Glasrohstoffen, welche überwiegend noch nicht aufgeschmolzen sind, bedeckt. Die Dicke des Gemengeteppichs 32 nimmt dabei in Produktionsrichtung gesehen ab, d.h. sie ist im Einlegebereich am größten.

In der Fig. 6 sind ferner einige Bereiche als Messpunkte zur Ermittlung der relevanten Temperaturen für die Verfahrensführung schematisch eingezeichnet. Hierzu gehören die Temperatur im Oberofen T_{O}, die Glastemperatur unter dem Gemenge T_{GuG}, die Glastemperatur unter dem Gemenge am Boden T_{G_BOD}, die Glastemperatur an der freien Glasbadoberfläche T_{G_OF}, und die Glastemperatur im Bereich unter der freien Glasbadoberfläche am Boden T_{G_Bod}. Der Grenzbereich zwischen Gemengeteppich 32 und freier Oberfläche ist im Prozess im Allgemeinen fließend. Als freie Oberfläche der Glasschmelze, also als freie Glasbadoberfläche 34, wird dabei ein Oberflächenbereich verstanden, welcher im Wesentlichen frei von nicht aufgeschmolzenen Glasrohstoffen ist, insbesondere welcher zu weniger als 80 %, bevorzugt zu weniger als 70 % und besonders bevorzugt zu weniger als 60 % mit nicht aufgeschmolzenen Glasrohstoffen bedeckt ist. Demnach sind wenigstens 20 %, bevorzugt wenigstens 30 % und besonders bevorzugt wenigstens 40 % der als frei bezeichneten Oberfläche der Glasschmelze frei von Gemenge und/oder Glasscherben.

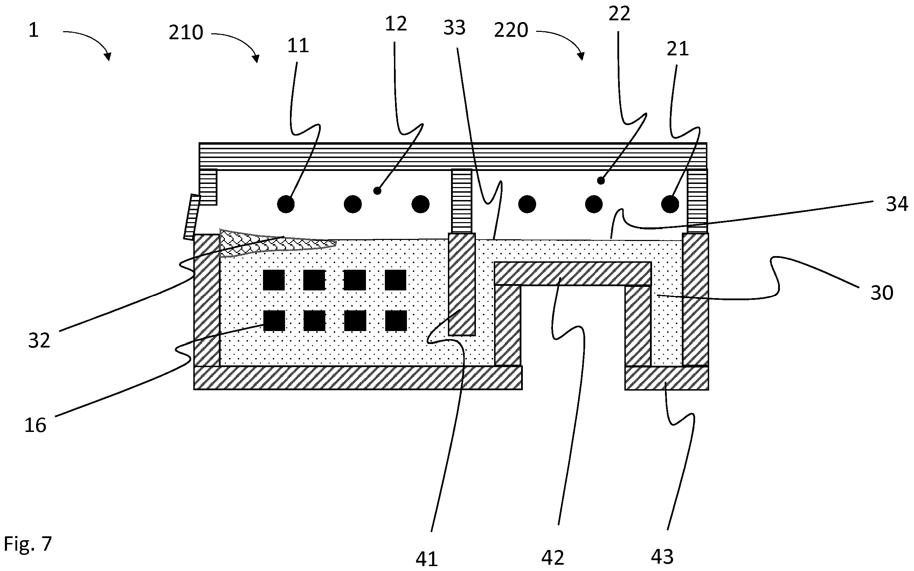

Fig. 7 zeigt schematisch eine weitere Ausführungsform einer Einschmelzvorrichtung 1 in einem Längsschnitt mit einer Einschmelzwanne 210 und einer Läuterwanne 220. In einer Anlage dieser Ausführungsform wurden die Kenngrößen gemäß Beispiel 5 in den Tabellen 3 und 4 ermittelt. Die Einschmelzwanne 210 und die Läuterwanne 220 verfügen jeweils über Gasbrenner 11, 21, welche im Bereich des Oberofens 12, 22 angeordnet sind. Die Oberöfen 12, 22 sind baulich getrennt durch einen Tauchriegel 41, welcher von dem Gewölbe des Oberofens 12, 22 bis in die Glasschmelze 30 hineinragt.

Schematisch eingezeichnet sind als Seitenelektroden ausgebildete Block- oder Plattenelektroden 16, welche im Bereich der Glasschmelze der Einschmelzwanne 210 angeordnet sind. Zwischen der Einschmelzwanne 210 und der Läuterwanne 220 ist ferner ein Überströmwall 42 vorgesehen, dessen obere Kante unterhalb der Glaslinie 33 liegt, so dass Glasschmelze in die Läuterwanne 220 gelangen kann. Ferner ist ein Durchfluss 43 zum Abziehen des geläuterten Glases vorgesehen. Die Anzahl der eingezeichneten Gasbrenner 11, 21 sowie der Block- oder Plattenelektroden 16 ist allein zur Veranschaulichung der Anordnung und Einbauposition ausgewählt und kann in der realen Einschmelzvorrichtung hiervon abweichen.

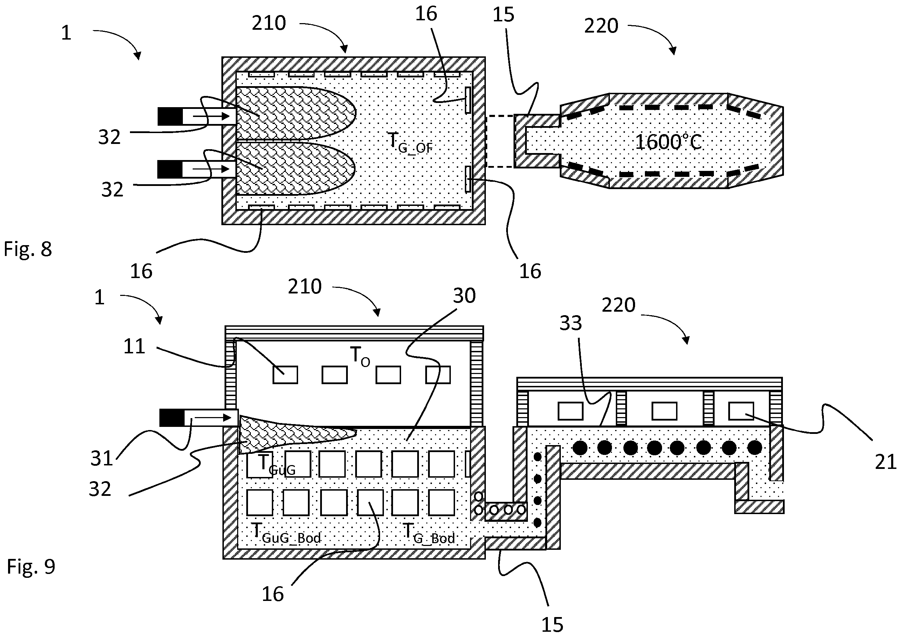

Fig. 8 und Fig. 9 zeigen den Aufbau der Einschmelzvorrichtung aus Fig. 7 in weiteren Ansichten. Fig. 8 zeigt die zweiteilige Einschmelzvorrichtung 1 in einer Draufsicht und Fig. 9 dieselbe Einschmelzvorrichtung 1 in einem Längsschnitt. Die exemplarisch abgebildete Einschmelzvorrichtung 1 umfasst eine Einschmelzwanne 210 sowie eine Läuterwanne 220, welche über einen Durchfluss 15 miteinander verbunden sind. In der in Fig. 8 gezeigten Draufsicht ist die Anordnung der Plattenelektroden 16 sowohl an den beiden Seitenwänden, als auch an der Stirnseite der Einschmelzwanne 210 gut zu erkennen.

In Fig. 9 ist erkennbar, dass diese Plattenelektroden 16 unterhalb der Glaslinie 33 angebracht sind. Der Gemengeteppich 32 ist in diesem Beispiel größer ausgebildet und umfasst etwa die Hälfte der Oberfläche der Glasschmelze 30. Ebenfalls eingezeichnet sind die Bereiche, in denen die für die Verfahrensführung relevanten Temperaturen der Einschmelzvorrichtung 1 ermittelt werden.

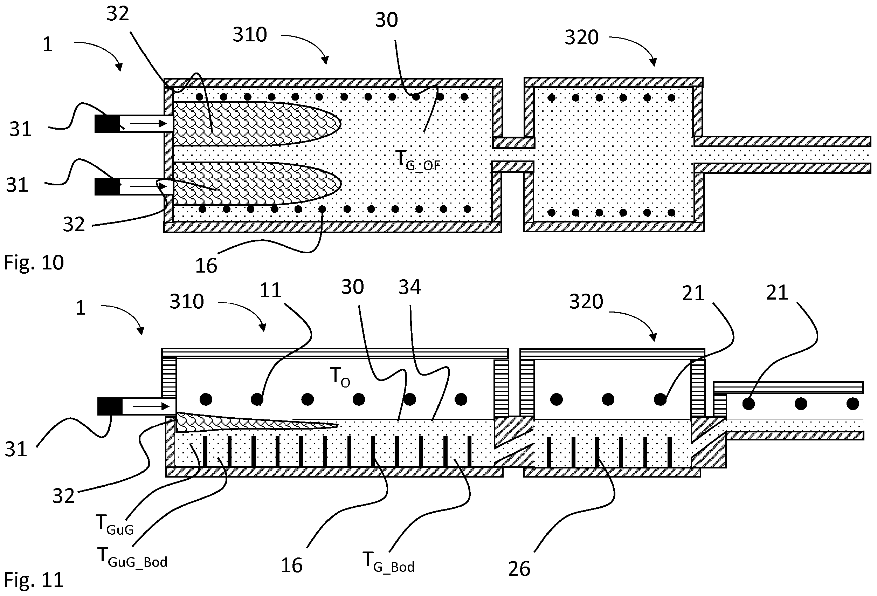

Fig. 10 und Fig. 11 zeigen eine weitere Ausführungsform einer zweiteiligen Einschmelzvorrichtung 1 mit Seitenelektroden, welche über eine Einschmelzleistung von mehr als 25 Tonnen/Tag verfügt. Die Elektroden 16 sind in diesem Beispiel als Stabelektroden ausgebildet und in einer Queranordnung in der Einschmelzwanne 310 vorgesehen, wobei die Elektroden 16 über Öffnungen im Boden der Einschmelzwanne 310 in die Glasschmelze 30 hineinragen und auf diese Weise eine hochexakte Temperaturführung auch der bodennahen Glasschmelze erlauben.

Zusätzlich ist im Oberofen sowohl in der Einschmelzwanne 310 als auch in der Läuterwanne 320 eine fossile Beheizung, im Beispiel in Form von Gasbrennern 11, 21, vorgesehen.

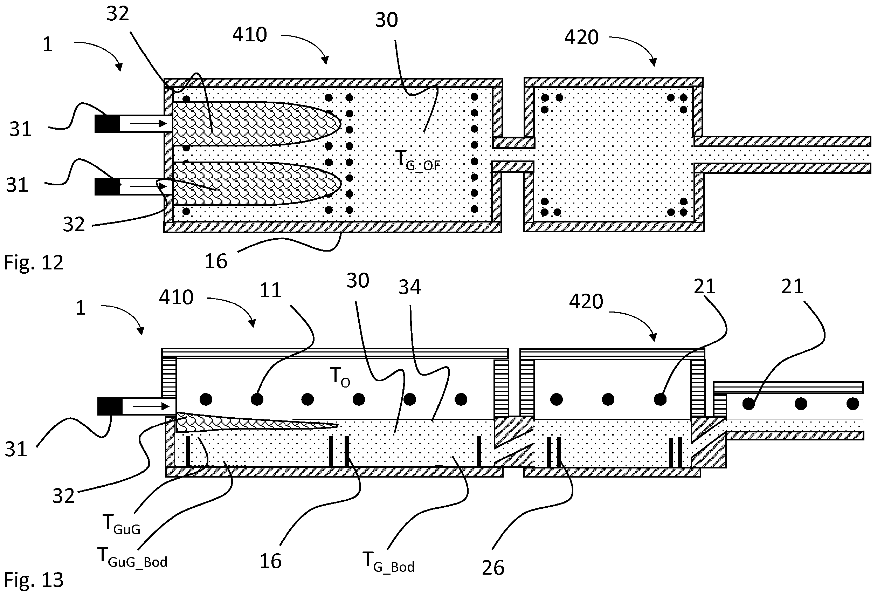

Schließlich zeigen Fig. 12 und Fig. 13 eine weitere Ausführungsform einer zweiteiligen Einschmelzvorrichtung 1 mit Seitenelektroden, welche über eine Einschmelzleistung von mehr als 25 Tonnen/Tag verfügt. Die Elektroden 16 sind in diesem Beispiel ebenfalls als Stabelektroden ausgebildet und in einer Längsanordnung in der Einschmelzwanne 410 vorgesehen, wobei die Elektroden 16 über Öffnungen im Boden der Einschmelzwanne 410 in die Glasschmelze 30 hineinragen und auf diese Weise eine hochexakte Temperaturführung auch der bodennahen Glasschmelze erlauben. Zusätzlich ist im Oberofen sowohl in der Einschmelzwanne 410 als auch in der Läuterwanne 420 eine fossile Beheizung, im Beispiel in Form von Gasbrennern 11, 21, vorgesehen.

## Patentansprüche

1. Verfahren zur Herstellung von Glasprodukten, vorzugsweise zur kontinuierlichen Herstellung von Glasprodukten, aus einer Glasschmelze (30), umfassend die folgenden Schritte:
- Bereitstellen von Glasrohstoffen, insbesondere Gemenge und/oder Glasscherben,
- Erwärmen der Glasrohstoffe in einer Einschmelzvorrichtung (1), wobei die Einschmelzvorrichtung (1) eine Einschmelzwanne (10, 110, 210) zum Erzeugen einer Glasschmelze (30) aus den Glasrohstoffen und einen Oberofen (12) umfasst, wobei die Bedeckung der Glasoberfläche des Einschmelzbereiches mit Glasrohstoffen mehr als 30 % beträgt und zumindest ein kleiner Teil der Oberfläche des Einschmelzbereiches nicht bedeckt ist,
- Beheizen der Einschmelzvorrichtung (1) derart, dass die Temperatur T_{G_BOD} der Glasschmelze (30) am Boden unter der freien Oberfläche der Einschmelzvorrichtung (1) und die Temperatur T_{O} der Atmosphäre im Oberofen (12) jeweils mindestens 1.300 °C beträgt, wobei ein vertikaler Temperaturunterschied T_{G_BOD} - T_{O} von mindestens 50°C eingestellt wird, und wobei die Temperatur der Glasschmelze (30) am Boden größer ist als die Temperatur der Atmosphäre im Oberofen (12), so dass gilt: T_{G_BOD} > T_{O}, und
- Ausleiten der Glasschmelze (30) aus der Einschmelzwanne (10, 110, 210), wobei die ausgeleitete Glasschmelze (30) vorzugsweise weniger als 1000 Blasen/kg mit einem Durchmesser von größer 50 µm aufweist.

2. Verfahren nach vorstehendem Anspruch, **dadurch gekennzeichnet, dass** ein Läutern der ausgeleiteten Glasschmelze (30) erfolgt, wobei eine Verminderung der Blasen in dem geläuterten Glas auf weniger als 10 Blasen/kg mit einem Durchmesser von größer 50 µm erfolgt, bevorzugt weniger als 5 Blasen/kg und besonders bevorzugt weniger als 1 Blase/kg.

3. Verfahren nach vorstehendem Anspruch, **dadurch gekennzeichnet, dass** der vertikale Temperaturunterschied T_{G_BOD} - T_{O} wenigstens 100 °C, bevorzugt wenigstens 150 °C, beträgt.

4. Verfahren nach einem der vorstehenden Ansprüche, **dadurch gekennzeichnet, dass** der horizontale Temperaturunterschied zwischen der Temperatur T_{GUG_BOD} der Glasschmelze (30) am Boden unter dem Gemengeteppich (32) und der Temperatur T_{G_BOD} der Glasschmelze (30) am Boden unter der freien Oberfläche von weniger als 80 °C, bevorzugt weniger als 50 °C, besonders bevorzugt von weniger als 20 °C beträgt.

5. Verfahren nach einem der vorstehenden Ansprüche, **dadurch gekennzeichnet, dass** das Verhältnis einer minimalen Verweilzeit tₘᵢₙ der Glasschmelze (30) in der Einschmelzwanne zu der mittleren geometrischen Verweilzeit t_{geo} der Glasschmelze (30) in der Einschmelzwanne, ermittelt aus dem Verhältnis von Wannenvolumen zu Aufgabevolumen pro Zeiteinheit, t_{geo}/tₘᵢₙ maximal 6, bevorzugt maximal 4, besonders bevorzugt maximal 3 beträgt.

6. Verfahren nach dem vorstehenden Anspruch, **dadurch gekennzeichnet, dass** die mittlere geometrische Verweilzeit t_{geo} weniger als 100 h, bevorzugt weniger als 70 h, besonders bevorzugt weniger als 40 h beträgt.

7. Verfahren nach einem der vorstehenden Ansprüche, **dadurch gekennzeichnet, dass** die Bedeckung der Glasoberfläche des Einschmelzbereiches mit Glasrohstoffen mehr als mehr als 40 % und besonders bevorzugt mehr als 50 % der zur Verfügung stehenden Oberfläche beträgt.

8. Verfahren nach einem der vorstehenden Ansprüche, **dadurch gekennzeichnet, dass** die Zusammensetzungen der Glasrohstoffe ausgewählt sind zur Herstellung von Glasprodukten umfassend Borosilikat-, Alumosilikat- oder Boro-Alumosilikat-Gläser oder Lithium-Aluminium-Silikat-Glaskeramiken.

9. Verfahren nach einem der vorstehenden Ansprüche, **dadurch gekennzeichnet, dass** die Zusammensetzung der Glasrohstoffe frei von Läutermitteln ist.

10. Verfahren nach einem der vorstehenden Ansprüche 1 bis 8, **dadurch gekennzeichnet, dass** die Zusammensetzung der Glasrohstoffe Läutermittel umfasst, insbesondere Arsen, Antimon, Zinn, Cer, Sulfat, Chlorid oder deren beliebige Kombinationen.

11. Verfahren nach einem der vorstehenden Ansprüche, **dadurch gekennzeichnet, dass** das Erwärmen der Glasschmelze elektrische und/oder fossile Heizeinrichtungen umfasst.

12. Verfahren nach einem der vorstehenden Ansprüche, **dadurch gekennzeichnet, dass** die zum Erwärmen der Glasschmelze erforderliche Energie mittels einer Kombination aus fossilen und elektrischen Heizeinrichtungen eingebracht wird, wobei vorzugsweise wenigstens 25 % und höchstens 75 % des Energieeintrags mittels elektrischer Heizeinrichtungen eingebracht wird, bevorzugt wenigstens 30 % und höchstens 70 % und besonders bevorzugt wenigstens 40 % und höchstens 60 %.

13. Verfahren nach einem der vorstehenden Ansprüche, **dadurch gekennzeichnet, dass** eine flächenhaft wirkende elektrische Beheizung, vorzugsweise durch Seiten-, Block- oder Platten-Elektroden (16), vorgesehen ist.

14. Verfahren nach einem der vorstehenden Ansprüche, **dadurch gekennzeichnet, dass** das Erwärmen der Glasschmelze (30) unter der mit den Glasrohstoffen bedeckten Oberfläche elektrisch erfolgt.

15. Verfahren nach einem der vorstehenden Ansprüche, **dadurch gekennzeichnet, dass** die Einschmelzvorrichtung (1) ferner zumindest eine der folgenden Komponenten umfasst:
- einen Einlegebereich, vorzugsweise mit einer Zuführeinrichtung (31) für das Einlegen der Glasrohstoffe, umfassend Gemenge und/oder Glasscherben,
- eine Ausleiteinrichtung zum Ausleiten der Glasschmelze, vorzugsweise einen Durchfluss (15),
- Elektroden (16) zur elektrischen Beheizung,
- einen Brückenwall,
- einen tauchenden Sperrriegel, welcher mit oder ohne Trennung im Oberofen (12, 22) ausgebildet ist.

16. Einschmelzvorrichtung (1) zur vorzugsweise kontinuierlichen Herstellung von Glasprodukten aus einer Glasschmelze (30), zur Herstellung von Glasprodukten umfassend Borosilikat-, Alumosilikat- oder Boro-Alumosilikat-Gläser oder Lithium-Aluminium-Silikat-Glaskeramiken nach vorstehendem Verfahren, umfassend:
- eine Einschmelzwanne (10, 110, 210) zum Erzeugen einer Glasschmelze (30) aus Glasrohstoffen und einen Oberofen (12),
- eine Zuführeinrichtung (31) für das Einlegen der Glasrohstoffe, wobei die Zuführung derart erfolgt, dass zumindest ein Teil der Oberfläche des Einschmelzbereiches der Einschmelzvorrichtung (1) mit den zugeführten Glasrohstoffen bedeckt werden kann,
- eine Heizeinrichtung zum Erwärmen der Glasschmelze (30) derart, dass die Temperatur T_{G_BOD} der Glasschmelze (30) am Boden unter der freien Oberfläche der Einschmelzvorrichtung (1) und die Temperatur T_{O} der Atmosphäre im Oberofen jeweils mindestens 1.300 °C beträgt, wobei ein vertikaler Temperaturunterschied T_{G_BOD} - T_{O} von mindestens 50°C eingestellt wird, und wobei die Temperatur der Glasschmelze (30) am Boden größer ist als die Temperatur der Atmosphäre im Oberofen, so dass gilt: T_{G_BOD} > T_{O}, und
- eine Ausleiteinrichtung zum Ausleiten der Glasschmelze (30) aus der Einschmelzwanne (10, 110, 210), wobei die ausgeleitete Glasschmelze (30) vorzugsweise weniger als 1000 Blasen/kg mit einem Durchmesser von größer 50 µm aufweist.

17. Einschmelzvorrichtung (1) nach vorstehendem Anspruch, **dadurch gekennzeichnet, dass** eine Läutereinrichtung zum Läutern der aus der Einschmelzwanne ausgeleiteten Glasschmelze (30) vorgesehen ist.

18. Einschmelzvorrichtung (1) nach einem der vorstehenden Ansprüche 16-17, **dadurch gekennzeichnet, dass** die Heizeinrichtung elektrische und/oder fossile Heizeinrichtungen umfasst.

19. Einschmelzvorrichtung (1) nach einem der vorstehenden Ansprüche 16-18, **dadurch gekennzeichnet, dass** die elektrische Heizeinrichtung eine flächenhaft wirkende elektrische Beheizung, vorzugsweise durch Seiten-, Block- oder Platten-Elektroden (16), umfasst.

20. Einschmelzvorrichtung (1) nach einem der vorstehenden Ansprüche 16-19, **dadurch gekennzeichnet, dass** das Erwärmen der Glasschmelze (30) unter der mit den Glasrohstoffen bedeckten Oberfläche elektrisch erfolgt.

## Claims

1. A method for producing glass products, preferably for continuously producing glass products, from a glass melt (30), comprising the steps of:
- providing glass raw materials, in particular a batch and/or cullets;
- heating the glass raw materials in a melting device (1), wherein the melting device (1) comprises a melting tank (10, 110, 210) for producing a glass melt (30) from the glass raw materials, and an upper furnace (12), wherein the glass surface of the melting area is covered with glass raw material to more than 30 %, and wherein at least a small portion of the surface of the melting area is not covered;
- heating the melting device (1) such that the temperature T_{G_BOD} of the glass melt (30) at the bottom below the free surface of the melting device (1) and the temperature Tₒ of the atmosphere in the upper furnace (12) is at least 1,300 °C in each case, wherein a vertical temperature difference T_{G_BOD} - Tₒ is set to at least 50°C, and wherein the temperature of the glass melt (30) at the bottom is greater than the temperature of the atmosphere in the upper furnace (12), so that: T_{G_BOD} > Tₒ; and
- discharging the glass melt (30) from the melting tank (10, 110, 210), wherein the discharged glass melt (30) preferably has less than 1000 bubbles per kg with a diameter of greater than 50 µm.

2. The method according to the preceding claim, **characterized in that** the discharged glass melt (30) is refined, whereby the bubbles in the refined glass are reduced to less than 10 bubbles per kg with a diameter of greater than 50 µm, preferably to less than 5 bubbles per kg, and more preferably to less than 1 bubble per kg.

3. The method according to the preceding claim, **characterized in that** the vertical temperature difference T_{G_BOD} - Tₒ is at least 100 °C, preferably at least 150 °C.

4. The method according to any one of the preceding claims, **characterized in that** the horizontal temperature difference between the temperature T_{GUG_BOD} of the glass melt (30) at the bottom below the batch carpet (32) and the temperature T_{G_BOD} of the glass melt (30) at the bottom below the free surface is less than 80 °C, preferably less than 50 °C, most preferably less than 20 °C.

5. The method according to any one of the preceding claims, **characterized in that** a ratio of a minimum residence time tₘᵢₙ of the glass melt (30) in the melting tank to the mean geometric residence time t_{geo} of the glass melt (30) in the melting tank as determined from the ratio of tank volume to feed volume per unit time, t_{geo}/tₘᵢₙ, is not more than 6, preferably not more than 4, most preferably not more than 3.

6. The method according to the preceding claim, **characterized in that** the mean geometric residence time t_{geo} is less than 100 hours, preferably less than 70 hours, most preferably less than 40 hours.

7. The method according to any one of the preceding claims, **characterized in that** the coverage of the glass surface of the melting area with glass raw materials is more than more than 40 % and most preferably more than 50 % of the available surface area.

8. The method according to any one of the preceding claims, **characterized in that** the compositions of the glass raw materials are selected for producing glass products comprising borosilicate glasses, aluminosilicate glasses or boro-aluminosilicate glasses, or lithium aluminium silicate glass ceramics.

9. The method according to any one of the preceding claims, **characterized in that** the composition of the glass raw materials is free of refining agents.

10. The method according to any one of the preceding claims 1 to 8, **characterized in that** the composition of the glass raw materials comprises refining agents, in particular arsenic, antimony, tin, cerium, sulphate, chloride, or any combination thereof.

11. The method according to any one of the preceding claims, **characterized in that** the heating of the glass melt involves electrical and/or fossil heating means.

12. The method according to any one of the preceding claims, **characterized in that** the energy required to heat the glass melt is introduced by a combination of fossil and electrical heating means, wherein preferably at least 25 % and at most 75 % of the energy input is introduced by electrical heating means, preferably at least 30 % and at most 70 %, and most preferably at least 40 % and at most 60 %.

13. The method according to any one of the preceding claims, **characterized by** providing electrical heating that is effective over a surface area, preferably through lateral electrodes, block electrodes or plate electrodes (16).

14. The method according to any one of the preceding claims, **characterized in that** the heating of the glass melt (30) below the surface covered by the glass raw materials is achieved electrically.

15. The method according to any one of the preceding claims, **characterized in that** the melting device (1) further comprises at least one of the following components:
- a feeding area, preferably comprising a feeder (31) for introducing the glass raw materials comprising a batch and/or cullets;
- discharging means for discharging the glass melt, preferably a passage (15),
- electrodes (16) for electrical heating;
- a bridging wall;
- a submerged locking bar which is configured with or without separation in the upper furnace (12, 22).

16. A melting device (1) for preferably continuously producing glass products from a glass melt (30), for producing glass products comprising borosilicate glasses, aluminosilicate glasses or boro-aluminosilicate glasses, or lithium aluminium silicate glass ceramics according to the preceding method, comprising:
- a melting tank (10, 110, 210) for producing a glass melt (30) from glass raw materials, and an upper furnace (12);
- a feeder (31) for introducing the glass raw materials, wherein the feeding is performed in such a way that at least part of the surface of the melting area of the melting device (1) can be covered with the glass raw materials supplied;
- heating means for heating the glass melt (30) such that the temperature T_{G_BOD} of the glass melt (30) at the bottom below the free surface of the melting device (1) and the temperature Tₒ of the atmosphere in the upper furnace is at least 1,300 °C in each case, wherein a vertical temperature difference T_{G_BOD} - Tₒ is set to at least 50 °C, and wherein the temperature of the glass melt (30) at the bottom is greater than the temperature of the atmosphere in the upper furnace, so that: T_{G_BOD} > Tₒ; and
- discharging means for discharging the glass melt (30) from the melting tank (10, 110, 210), wherein the discharged glass melt (30) preferably includes less than 1000 bubbles per kg with a diameter of greater than 50 µm.

17. The melting device (1) according to the preceding claim, **characterized in that** a refining device is provided for refining the glass melt (30) discharged from the melting tank.

18. The melting device (1) according to any one of the preceding claims 16 - 17, **characterized in that** the heating means comprise electrical and/or fossil heating means.

19. The melting device (1) according to any one of the preceding claims 16 - 18, **characterized in that** the electrical heating means involve electrical heating that are effective over a surface area, preferably through lateral electrodes, block electrodes or plate electrodes (16).

20. The melting device (1) according to any one of the preceding claims 16 - 19, **characterized in that** the heating of the glass melt (30) below the surface covered by the glass raw materials is achieved electrically.

## Revendications

1. Procédé de fabrication de produits en verre, de préférence de fabrication continue de produits en verre, à partir d'une masse de verre fondue (30), comprenant les étapes suivantes :
- de fourniture de matières premières du verre, en particulier de fritte et/ou de calcin,
- de réchauffage des matières premières du verre dans un dispositif de fusion (1), dans lequel le dispositif de fusion (1) comprend une cuve de fusion (10, 110, 210) destinée à produire une masse de verre fondue (30) à partir des matières premières du verre et un four supérieur (12), dans lequel le recouvrement de la surface de verre de la zone de fusion avec des matières premières du verre est supérieur à 30 % et au moins une petite partie de la surface de la zone de fusion n'est pas recouverte,
- de chauffage du dispositif de fusion (1) de telle manière que la température T_{G_BOD} de la masse fondue de verre (30) sur le fond sous la surface libre du dispositif de fusion (1) et la température T_{O} de l'atmosphère dans le four supérieur (12) sont respectivement d'au moins 1300 °C, dans lequel une différence de température verticale T_{G_BOD}
- T_{O} d'au moins 50 °C est réglée, et dans lequel la température de la masse fondue de verre (30) sur le fond est supérieure à la température de l'atmosphère dans le four supérieur (12) de telle sorte que s'applique : T_{G_BOD} > T_{O}, et
- d'évacuation de la masse fondue de verre (30) hors de la cuve de fusion (10, 110, 210), dans lequel la masse fondue de verre (30) évacuée présente de préférence moins de 1000 bulles/kg avec un diamètre supérieur à 50 µm.

2. Procédé selon la revendication précédente, **caractérisé en ce qu'**un raffinage de la masse fondue de verre (30) évacuée est effectué, dans lequel est effectuée une réduction des bulles dans le verre raffiné sur un nombre inférieur à 10 bulles/kg avec un diamètre supérieur à 50 um, de manière préférée inférieur à 5 bulles/kg et de manière préférée inférieur à 1 bulle/kg.

3. Procédé selon la revendication précédente, **caractérisé en ce que** la différence de température verticale T_{G_BOD} - T_{O} est d'au moins 100 °C, de manière préférée d'au moins 150 °C.

4. Procédé selon l'une quelconque des revendications précédentes, **caractérisé en ce que** la différence de température verticale entre la température T_{GuG_BOD} de la masse fondue de verre (30) sur le fond sous le tapis de fritte (32) et la température T_{G_BOD} de la masse fondue de verre (30) sur le fond sous la surface libre est inférieure à 80 °C, de manière préférée inférieure à 50 °C, de manière particulièrement préférée inférieure à 20 °C.

5. Procédé selon l'une quelconque des revendications précédentes, **caractérisé en ce que** le rapport d'un temps de séjour minimal tₘᵢₙ de la masse fondue de verre (30) dans la cuve de fusion par rapport au temps de séjour géométrique t_{geo} moyen de la masse fondue de verre (30) dans la cuve de fusion, déterminé à partir du rapport du volume de cuve par rapport au volume de distribution par unité de temps, t_{geo}/tₘᵢₙ est de 6 au maximum, de manière préférée de 4 au maximum, de manière particulièrement préférée de 3 au maximum.

6. Procédé selon la revendication précédente, **caractérisé en ce que** le temps de séjour géométrique t_{geo} moyen est inférieur à 100 h, de manière préférée inférieur à 70 h, de manière particulièrement préférée inférieur à 40 h.

7. Procédé selon l'une quelconque des revendications précédentes, **caractérisé en ce que** le recouvrement de la surface de verre de la zone de fusion avec des matières premières du verre est supérieur à 40 % et de manière particulièrement préférée est supérieur à 50 % de la surface disponible.

8. Procédé selon l'une quelconque des revendications précédentes, **caractérisé en ce que** les compositions des matières premières du verre sont choisies pour fabriquer des produits en verre comprenant des verres à base de borosilicate, d'aluminosilicate ou de boro-aluminosilicate ou des vitrocéramiques à base de lithium-aluminium-silicate.

9. Procédé selon l'une quelconque des revendications précédentes, **caractérisé en ce que** la composition des matières premières du verre est exempte d'agents de raffinage.

10. Procédé selon l'une quelconque des revendications précédentes 1 à 8, **caractérisé en ce que** la composition des matières premières du verre comprend des agents de raffinage, en particulier de l'arsenic, de l'antimoine, de l'étain, du cérium, du sulfate, du chlorure ou leurs combinaisons quelconques.

11. Procédé selon l'une quelconque des revendications précédentes, **caractérisé en ce que** le réchauffage de la masse fondue de verre comprend des systèmes de chauffage électriques et/ou à combustibles fossiles.

12. Procédé selon l'une quelconque des revendications précédentes, **caractérisé en ce que** l'énergie requise pour réchauffer la matière fondue de verre est introduite au moyen d'une combinaison de systèmes de chauffage à combustibles fossiles et électriques, dans lequel de préférence au moins 25 % et au maximum 75 % de l'apport en énergie est introduit au moyen de systèmes de chauffage électriques, de manière préférée au moins 30 % et au maximum 70 % et de manière particulièrement préférée au moins 40 % et au maximum 60 %.

13. Procédé selon l'une quelconque des revendications précédentes, **caractérisé en ce qu'**un chauffage électrique agissant sur une surface, de préférence par des électrodes latérales, en bloc ou en plaques (16), est prévu.

14. Procédé selon l'une quelconque des revendications précédentes, **caractérisé en ce que** le réchauffage de la masse fondue de verre (30) sous la surface recouverte par les matières premières du verre est effectué de manière électrique.

15. Procédé selon l'une quelconque des revendications précédentes, **caractérisé en ce que** le dispositif de fusion (1) comprend en outre au moins un des composants suivants :
- une zone d'insertion, de préférence avec un système d'amenée (31) pour l'insertion des matières premières du verre, comprenant de la fritte et/ou du calcin,
- un système d'évacuation destiné à évacuer la masse fondue de verre, de préférence un passage (15),
- des électrodes (16) pour le chauffage électrique,
- un parapet de pont,
- un verrou de fermeture plongeant, lequel est réalisé avec ou sans séparation dans le four supérieur (12, 22).

16. Dispositif de fusion (1) destiné à fabriquer de préférence de manière continue des produits en verre à partir d'une masse fondue de verre (30), pour fabriquer des produits en verre comprenant des verres à base de borosilicate, d'aluminosilicate ou de boro-aluminosilicate ou des vitrocéramiques à base de lithium-aluminium-silicate selon un procédé précédent, comprenant :
- une cuve de fusion (10, 110, 210) destinée à produire une masse fondue de verre (30) à partir de matières premières du verre et un four supérieur (12),
- un système d'amenée (31) pour l'insertion des matières premières du verre, dans lequel l'amenée est effectuée de telle manière qu'au moins une partie de la surface de la zone de fusion du dispositif de fusion (1) peut être recouverte des matières premières du verre amenées,
- un système de chauffage destiné à réchauffer la masse fondue de verre (30) de telle manière que la température T_{G_BOD} de la masse fondue de verre (30) sur le fond sous la surface libre du dispositif de fusion (1) et la température T_{O} de l'atmosphère dans le four supérieur sont respectivement d'au moins 1300 °C, dans lequel une différence de température verticale T_{G_BOD} - T_{O} d'au moins 50 °C est réglée, et dans lequel la température de la masse fondue de verre (30) sur le fond est supérieure à la température de l'atmosphère dans le four supérieur, de sorte que s'applique : T_{G_BOD} > T_{O}, et
- un système d'évacuation destiné à évacuer la masse fondue de verre (30) hors de la cuve de fusion (10, 110, 210), dans lequel la masse fondue de verre (30) évacuée présente de préférence moins de 1000 bulles/kg avec un diamètre supérieur à 50 µm.

17. Dispositif de fusion (1) selon la revendication précédente, **caractérisé en ce qu'**un système de raffinage est prévu pour raffiner la masse fondue de verre (30) évacuée de la cuve de fusion.

18. Dispositif de fusion (1) selon l'une quelconque des revendications précédentes 16 - 17, **caractérisé en ce que** le système de chauffage comprend des systèmes de chauffage électriques et/ou à combustibles fossiles.

19. Dispositif de fusion (1) selon l'une quelconque des revendications précédentes 16 - 18, **caractérisé en ce que** le système de chauffage électrique comprend un chauffage électrique agissant sur une surface, de préférence par des électrodes latérales, en bloc ou en plaques (16).

20. Dispositif de fusion (1) selon l'une quelconque des revendications précédentes 16 - 19, **caractérisé en ce que** le réchauffage de la masse fondue de verre (30) sous la surface recouverte avec les matières premières du verre est effectué de manière électrique.
